# EUROPEAN PATENT APPLICATION

(11) **EP 4 838 962 A1**
(43) Date of publication of application: **11.11.2026**
(21) Application number: 24914593.9
(22) Date of filing: 03.01.2024
(51) Int. Cl.: H04W 52/02

(54) **COMMUNICATION METHODS, TERMINALS, NETWORK DEVICES, SYSTEM AND STORAGE MEDIUM**

(71) Applicant: Beijing Xiaomi Mobile Software Co., Ltd., Beijing 100085 (CN)
(72) Inventor: XIAO, Kai, Beijing 100085 (CN); FU, Ting, Beijing 100085 (CN)
(74) Representative: Gunzelmann, Rainer
(86) International application number: PCT/CN2024/070476
(87) International publication number: WO 2025/145360

(57) **Abstract**

The present disclosure relates to communication methods, terminals, network devices, a system, and a storage medium. A method comprises: receiving a wake up signal sent by a network device, the wake up signal comprising a first resource, and the first resource carrying the wake up signal; and, on the basis of the wake up signal, determining a first state of a main radio (MR) of a terminal. Thus, the first resource carries the wake up signal and, on the basis of the first resource, the wake up signal detected by the terminal is more accurate, improving the detection performance of a wake-up machine in the terminal.

## Description

### FIELD

The present disclosure relates to the field of communication technology, and particularly to a communication method, a terminal, a network device, a system and a storage medium.

### BACKGROUND

In related art, a low power (LP) wake up signal (WUS) is introduced. The LP-WUS is received using a separate receiver, referred to as an LP-Wake Up Receiver (LP-WUR). A terminal normally uses a main radio (MR) to process downlink and/or uplink data. The WUS may be used in radio resource control (RRC) connected, inactive, and idle states. The LP-WUS is received via the LP-WUR, and the LP-WUS may instruct the MR of the terminal to switch between a sleep state and a wake up state.

### SUMMARY

To overcome the problems in the related art, the present disclosure provides a communication method, a terminal, a network device, a system, and a storage medium.

According to a first aspect of embodiments of the present disclosure, there is provided a communication method, performed by a terminal, including:
receiving a wake up signal sent by a network device, in which the wake up signal includes a first resource, and the first resource carries the wake up signal; and
determining a first state of a main radio (MR) of the terminal according to the wake up signal.

According to a second aspect of embodiments of the present disclosure, there is provided a communication method, performed by a network device, including:
sending a wake up signal to a terminal, in which the wake up signal includes a first resource, the first resource carries the wake up signal, and the wake up signal is used to instruct the terminal to determine a first state of a main radio (MR) of the terminal according to the wake up signal.

According to a third aspect of embodiments of the present disclosure, there is provided a communication method, including:
sending, by a network device, a wake up signal to a terminal, in which the wake up signal is carried by a first resource; and
determining, by the terminal, a first state of a main radio (MR) of the terminal according to the wake up signal.

According to a fourth aspect of embodiments of the present disclosure, there is provided a terminal, including:
a transceiver module configured to receive a wake up signal sent by a network device, in which the wake up signal is carried by a first resource; and
a processing module configured to determine a first state of a main radio (MR) of the terminal according to the wake up signal.

According to a fifth aspect of embodiments of the present disclosure, there is provided a network device, including:
a transceiver module configured to send a wake up signal to a terminal, in which the wake up signal is carried by a first resource, and the wake up signal is used to instruct the terminal to determine a first state of a main radio (MR) of the terminal according to the wake up signal.

According to a sixth aspect of embodiments of the present disclosure, there is provided a terminal, including:
one or more processors,
in which the terminal is configured to perform the communication method according to any one of the embodiments of the first aspect of the present disclosure.

According to a seventh aspect of embodiments of the present disclosure, there is provided a network device, including:
one or more processors,
in which the network device is configured to perform the communication method according to any one of the embodiments of the second aspect of the present disclosure.

According to an eighth aspect of embodiments of the present disclosure, there is provided a communication system, including:
a terminal configured to implement the communication method according to any one of the embodiments of the first aspect of the present disclosure; and
a network device configured to implement the communication method according to any one of the embodiments of the second aspect of the present disclosure.

According to a ninth aspect of embodiments of the present disclosure, there is provided a storage medium storing instructions that, when executed on a communication device, cause the communication device to perform the communication method according to any one of the embodiments of the first aspect and the second aspect of the present disclosure.

In the foregoing technical solution, the wake up signal sent by the network device is received, in which the wake up signal is carried by the first resource. The first state of the MR of the terminal is determined according to the wake up signal. The wake up signal is carried via the first resource, and the wake up signal detected by the terminal is made more accurate based on the first resource, improving the detection performance of the wake up receiver in the terminal.

### BRIEF DESCRIPTION OF THE DRAWINGS

In order to clearly illustrate technical solutions in embodiments of the present disclosure, the drawings required for describing embodiments are introduced as follows. The following drawings merely describe some embodiments of the present disclosure, and do not impose specific limitations on the protection scope of the present disclosure.
FIG. 1 is a schematic diagram illustrating an architecture of a communication system according to an embodiment of the present disclosure.
FIG. 2 is an interactive schematic diagram illustrating a communication method according to an embodiment of the present disclosure.
FIG. 3 is a flowchart illustrating a communication method according to an embodiment of the present disclosure.
FIG. 4 is a flowchart illustrating a communication method according to an embodiment of the present disclosure.
FIG. 5a is a schematic diagram illustrating a communication method according to an embodiment of the present disclosure.
FIG. 5b is a schematic diagram illustrating an LP-WUS information mapping relationship according to an embodiment of the present disclosure.
FIG. 5c is a schematic diagram illustrating an LP-WUS information mapping relationship according to an embodiment of the present disclosure.
FIG. 5d is a schematic diagram illustrating an LP-WUS information mapping relationship according to an embodiment of the present disclosure.
FIG. 5e is a schematic diagram illustrating an LP-WUS information mapping relationship according to an embodiment of the present disclosure.
FIG. 5f is a schematic diagram illustrating an LP-WUS information mapping relationship according to an embodiment of the present disclosure.
FIG. 5g is a schematic diagram illustrating an LP-WUS information mapping relationship according to an embodiment of the present disclosure.
FIG. 5h is a schematic diagram illustrating an LP-WUS information mapping relationship according to an embodiment of the present disclosure.
FIG. 5i is a schematic diagram illustrating an LP-WUS information mapping relationship according to an embodiment of the present disclosure.
FIG. 5j is a schematic diagram illustrating an LP-WUS information mapping relationship according to an embodiment of the present disclosure.
FIG. 5k is a schematic diagram illustrating an LP-WUS information mapping relationship according to an embodiment of the present disclosure.
FIG. 6 is a block diagram illustrating a terminal provided in an embodiment of the present disclosure.
FIG. 7 is a block diagram illustrating a network device provided in an embodiment of the present disclosure.
FIG. 8 is a block diagram illustrating a network device 8100 provided in an embodiment of the present disclosure.

### DETAILED DESCRIPTION

Embodiments of the present disclosure provide a communication method, a terminal, a network device, a system, and a storage medium.

In a first aspect, embodiments of the present disclosure provide a communication method, performed by a terminal, including:
receiving a wake up signal sent by a network device, in which the wake up signal includes a first resource, and the first resource carries the wake up signal; and
determining a first state of a main radio (MR) of the terminal according to the wake up signal.

In the foregoing technical solution, the wake up signal sent by the network device is received, in which the wake up signal is carried by the first resource. The first state of the MR of the terminal is determined according to the wake up signal. The wake up signal is carried via the first resource, and the wake up signal detected by the terminal is made more accurate based on the first resource, improving the detection performance of the wake up receiver in the terminal.

In combination with some embodiments of the first aspect, the wake up signal includes at least one of a preamble, data or a check code.

In combination with some embodiments of the first aspect, a duration of the wake up signal is a first duration, a duration of the preamble is a second duration, a duration of the data is a third duration, and a duration of the check code is a fourth duration,
in which the second duration is less than or equal to the first duration;
the third duration is less than or equal to the first duration; and
the fourth duration is less than or equal to the first duration.

In combination with some embodiments of the first aspect, the first duration, the second duration, the third duration and the fourth duration are determined by any one of:
first protocol information;
first information sent by the network device, in which the first information is semi-static configuration information; or
second information sent by the network device, in which the second information is dynamic configuration information.

In combination with some embodiments of the first aspect, the first resource includes at least one of:
a first symbol, in which the first symbol is an on-off keying (OOK) modulation symbol; or
a first sequence, in which the first sequence is a time domain sequence or a frequency domain sequence.

In combination with some embodiments of the first aspect, the wake up signal includes the preamble, and the first symbol and/or the first sequence carry the wake up signal within the second duration of the preamble.

In combination with some embodiments of the first aspect, a difference between the first duration and the second duration is a remaining duration, the wake up signal is carried within the remaining duration, and the remaining duration is the third duration, or the remaining duration is a sum of the third duration and the fourth duration.

In combination with some embodiments of the first aspect, the wake up signal includes the preamble, the first symbol and/or the first sequence carries first subset information within the second duration of the preamble, and the first subset information is a subset of the wake up signal.

In combination with some embodiments of the first aspect, a difference between the first duration and the second duration is a remaining duration, second subset information is carried within the remaining duration, the second subset information is a subset of the wake up signal, and a sum of the second subset information and the first subset information is the wake up signal; and the remaining duration is the third duration, or the remaining duration is a sum of the third duration and the fourth duration.

In combination with some embodiments of the first aspect, the wake up signal includes the preamble, the first sequence carries first subset information within the second duration of the preamble, and the first subset information is a subset of the wake up signal.

In combination with some embodiments of the first aspect, a difference between the first duration and the second duration is a remaining duration, within the remaining duration, the first symbol carries the wake up signal, and the first sequence carries second subset information; the second subset information is a subset of the wake up signal, and a sum of the second subset information and the first subset information is the wake up signal; and the remaining duration is the third duration, or the remaining duration is a sum of the third duration and the fourth duration.

In combination with some embodiments of the first aspect, a difference between the first duration and the second duration is a remaining duration, within the remaining duration, the first symbol carries second subset information, and the first sequence carries the second subset information; the second subset information is a subset of the wake up signal, and a sum of the second subset information and the first subset information is the wake up signal; and the remaining duration is the third duration, or the remaining duration is a sum of the third duration and the fourth duration.

In combination with some embodiments of the first aspect, the wake up signal includes the preamble, and the first sequence carries the wake up signal within the second duration of the preamble.

In combination with some embodiments of the first aspect, a difference between the first duration and the second duration is a remaining duration, within the remaining duration, the first symbol carries the wake up signal, and the first sequence carries the wake up signal; and the remaining duration is the third duration, or the remaining duration is a sum of the third duration and the fourth duration.

In combination with some embodiments of the first aspect, a difference between the first duration and the second duration is a remaining duration, within the remaining duration, the first sequence carries second subset information, and the first symbol carries third subset information; the second subset information and the third subset information are each a subset of the wake up signal, and the third subset information, the second subset information and the first subset information constitute the wake up signal; and the remaining duration is the third duration, or the remaining duration is a sum of the third duration and the fourth duration.

In combination with some embodiments of the first aspect, a difference between the first duration and the second duration is a remaining duration, within the remaining duration, the first symbol carries the first subset information, and the first sequence carries second subset information; the first subset information and the second subset information are each a subset of the wake up signal, and a sum of the second subset information and the first subset information is the wake up signal; and the remaining duration is the third duration, or the remaining duration is a sum of the third duration and the fourth duration.

In combination with some embodiments of the first aspect, a difference between the first duration and the second duration is a remaining duration, within the remaining duration, the first symbol carries the wake up signal, and the first sequence carries the first subset information; and the remaining duration is the third duration, or the remaining duration is a sum of the third duration and the fourth duration.

In combination with some embodiments of the first aspect, a difference between the first duration and the second duration is a remaining duration, within the remaining duration, the first symbol carries second subset information, and the first sequence carries the first subset information; the second subset information is a subset of the wake up signal; and the remaining duration is the third duration, or the remaining duration is a sum of the third duration and the fourth duration.

In combination with some embodiments of the first aspect, the second duration includes a first sub-duration and a second sub-duration, the first sequence includes a target sequence within the first sub-duration, and the first sequence carries the wake up signal within the second sub-duration.

In a second aspect, embodiments of the present disclosure provide a communication method, performed by a network device, including:
sending a wake up signal to a terminal, in which the wake up signal includes a first resource, the first resource carries the wake up signal, and the wake up signal is used to instruct the terminal to determine a first state of a main radio (MR) of the terminal according to the wake up signal.

In combination with some embodiments of the second aspect, the wake up signal includes at least one of a preamble, data or a check code.

In combination with some embodiments of the second aspect, a duration of the wake up signal is a first duration, a duration of the preamble is a second duration, a duration of the data is a third duration, and a duration of the check code is a fourth duration,
in which the second duration is less than or equal to the first duration;
the third duration is less than or equal to the first duration; and
the fourth duration is less than or equal to the first duration.

In combination with some embodiments of the second aspect, the first duration, the second duration, the third duration and the fourth duration are determined by any one of:
first protocol information;
first information sent by the network device, in which the first information is semi-static configuration information; or
second information sent by the network device, in which the second information is dynamic configuration information.

In combination with some embodiments of the second aspect, the first resource includes at least one of:
a first symbol, in which the first symbol is an on-off keying (OOK) modulation symbol; or
a first sequence, in which the first sequence is a time domain sequence or a frequency domain sequence.

In combination with some embodiments of the second aspect, the wake up signal includes the preamble, and the first symbol or the first sequence carry the wake up signal within the second duration of the preamble.

In combination with some embodiments of the second aspect, a difference between the first duration and the second duration is a remaining duration, the wake up signal is carried within the remaining duration, and the remaining duration is the third duration, or the remaining duration is a sum of the third duration and the fourth duration.

In combination with some embodiments of the second aspect, the wake up signal includes the preamble, the first symbol or the first sequence carries first subset information within the second duration of the preamble, and the first subset information is a subset of the wake up signal.

In combination with some embodiments of the second aspect, a difference between the first duration and the second duration is a remaining duration, second subset information is carried within the remaining duration, the second subset information is a subset of the wake up signal, and a sum of the second subset information and the first subset information is the wake up signal; and the remaining duration is the third duration, or the remaining duration is a sum of the third duration and the fourth duration.

In combination with some embodiments of the second aspect, the wake up signal includes the preamble, the first sequence carries first subset information within the second duration of the preamble, and the first subset information is a subset of the wake up signal.

In combination with some embodiments of the second aspect, a difference between the first duration and the second duration is a remaining duration, within the remaining duration, the first symbol carries the wake up signal, and the first sequence carries second subset information; the second subset information is a subset of the wake up signal, and a sum of the second subset information and the first subset information is the wake up signal; and the remaining duration is the third duration, or the remaining duration is a sum of the third duration and the fourth duration.

In combination with some embodiments of the second aspect, a difference between the first duration and the second duration is a remaining duration, within the remaining duration, the first symbol carries second subset information, and the first sequence carries the second subset information; the second subset information is a subset of the wake up signal, and a sum of the second subset information and the first subset information is the wake up signal; and the remaining duration is the third duration, or the remaining duration is a sum of the third duration and the fourth duration.

In combination with some embodiments of the second aspect, the wake up signal includes the preamble, the first sequence carries the wake up signal within the second duration of the preamble.

In combination with some embodiments of the second aspect, a difference between the first duration and the second duration is a remaining duration, within the remaining duration, the first symbol carries the wake up signal, and the first sequence carries the wake up signal; and the remaining duration is the third duration, or the remaining duration is a sum of the third duration and the fourth duration.

In combination with some embodiments of the second aspect, a difference between the first duration and the second duration is a remaining duration, within the remaining duration, the first sequence carries second subset information, and the first symbol carries third subset information; the second subset information and the third subset information are each a subset of the wake up signal, and the third subset information, the second subset information and the first subset information constitute the wake up signal; and the remaining duration is the third duration, or the remaining duration is a sum of the third duration and the fourth duration.

In combination with some embodiments of the second aspect, a difference between the first duration and the second duration is a remaining duration, within the remaining duration, the first symbol carries the first subset information, and the first sequence carries second subset information; the first subset information and the second subset information are each a subset of the wake up signal, and a sum of the second subset information and the first subset information is the wake up signal; and the remaining duration is the third duration, or the remaining duration is a sum of the third duration and the fourth duration.

In combination with some embodiments of the second aspect, a difference between the first duration and the second duration is a remaining duration, within the remaining duration, the first symbol carries the wake up signal, and the first sequence carries the first subset information; and the remaining duration is the third duration, or the remaining duration is a sum of the third duration and the fourth duration.

In combination with some embodiments of the second aspect, a difference between the first duration and the second duration is a remaining duration, within the remaining duration, the first symbol carries second subset information, and the first sequence carries the first subset information; the second subset information is a subset of the wake up signal; and the remaining duration is the third duration, or the remaining duration is a sum of the third duration and the fourth duration.

In combination with some embodiments of the second aspect, the second duration includes a first sub-duration and a second sub-duration, the first sequence includes a target sequence within the first sub-duration, and the first sequence carries the wake up signal within the second sub-duration.

In a third aspect, embodiments of the present disclosure provide a communication method, including:
sending, by a network device, a wake up signal to a terminal, in which the wake up signal is carried by a first resource; and
determining, by the terminal, a first state of a main radio (MR) of the terminal according to the wake up signal.

In a fourth aspect, embodiments of the present disclosure provide a terminal, including:
a transceiver module configured to receive a wake up signal sent by a network device, in which the wake up signal is carried by a first resource; and
a processing module configured to determine a first state of a main radio (MR) of the terminal according to the wake up signal.

In a fifth aspect, embodiments of the present disclosure provide a network device, including:
a transceiver module configured to send a wake up signal to a terminal, in which the wake up signal is carried by a first resource, and the wake up signal is used to instruct the terminal to determine a first state of a main radio (MR) of the terminal according to the wake up signal.

In a sixth aspect, embodiments of the present disclosure provide a terminal, including:
one or more processors,
in which the terminal is configured to perform the communication method according to any one of the embodiments of the first aspect of the present disclosure.

In a seventh aspect, embodiments of the present disclosure provide a network device, including:
one or more processors,
in which the network device is configured to perform the communication method according to any one of the embodiments of the second aspect of the present disclosure.

In an eighth aspect, embodiments of the present disclosure provide a communication system, including:
a terminal configured to implement the communication method according to any one of the embodiments of the first aspect of the present disclosure; and
a network device configured to implement the communication method according to any one of the embodiments of the second aspect of the present disclosure.

In a ninth aspect, embodiments of the present disclosure provide a storage medium storing instructions that, when executed on a communication device, cause the communication device to perform the communication method according to any one of the embodiments of the first aspect and the second aspect of the present disclosure.

In the above-mentioned manner, the network device sends the wake up signal to the terminal, and the terminal receives the wake up signal sent by the network device. The wake up signal includes the first resource, the first resource carries the wake up signal, and the first state of the MR of the terminal is determined according to the wake up signal. The wake up signal is carried via the first resource, and the wake up signal detected by the terminal is made more accurate based on the first resource, improving the detection performance of the wake up receiver in the terminal.

Embodiments of the present disclosure provide a communication method, a terminal, a network device, a system, and a storage medium. In some embodiments, terms such as communication method and method for processing information may be used interchangeably; terms such as communication device and apparatus for processing information may be used interchangeably; terms such as system for processing information and communication system may be used interchangeably.

Embodiments of the present disclosure are not exhaustive, but are merely illustrative of some embodiments, and are not intended to be a specific limitation on the scope of protection of the present disclosure. In the absence of contradictions, each step in a certain embodiment may be implemented as an independent embodiment, and the steps may be arbitrarily combined, for example, a solution in which some steps are removed in a certain embodiment may also be implemented as an independent embodiment, and the order of each step in a certain embodiment may be arbitrarily exchanged, and further, optional implementations in a certain embodiment may be arbitrarily combined. Furthermore, various embodiments may be arbitrarily combined, for example, some or all steps of different embodiments may be arbitrarily combined, and a certain embodiment may be arbitrarily combined with optional implementations of other embodiments.

In each embodiment of the present disclosure, if there is no special description and logical conflict, the terms and/or descriptions among the embodiments are consistent and may be referenced to each other, and technical features in different embodiments may be combined to form new embodiments according to their intrinsic logical relationships.

The terms used in embodiments of the present disclosure is for the purpose of describing specific embodiments only, and is not intended to limit the present disclosure.

In embodiments of the present disclosure, unless otherwise specified, elements represented in the singular form, such as "a", "an", "the", "above", "said", "preceding", "this", and the like, may represent "one and only one", or may represent "one or more", "at least one", and the like. For example, in a case where an article such as "a", "an", and "the", in English is used in translation, a noun after the article may be understood as a singular expression or a plural expression.

In embodiments of the present disclosure, "multiple" refers to two or more.

In some embodiments, terms such as "at least one of", "one or more", "a plurality of", "multiple", may be replaced with each other.

In some embodiments of the present disclosure, descriptions such as "at least one of A or B", "A and/or B", "A in one case and B in another", "in response to one case A and in response to another case B" may include the following technical solutions depending on the situation: in some embodiments A (A is executed regardless of B); in some embodiments B (B is executed regardless of A); in some embodiments, execution is selected from A and B (A and B are selectively executed); in some embodiments A and B (both A and B are executed). The same applies when there are more branches such as A, B, and C.

In some embodiments of the present disclosure, descriptions such as "A or B" may include the following technical solutions depending on the situation: in some embodiments A (A is executed regardless of B); in some embodiments B (B is executed regardless of A); in some embodiments, execution is selected from A and B (A and B are selectively executed). The same applies when there are more branches such as A, B, and C.

The prefix words such as "first" and "second" in embodiments of the present disclosure are only for distinguishing different description objects, and do not constitute restrictions on the position, order, priority, quantity, content, etc. of the description objects. For statements of the description objects, reference is made to the description of the context in the claims or the embodiments, and the use of the prefix words should not constitute unnecessary restrictions. For example, if the description object is a "field", the ordinal number before the "field" in the "first field" and the "second field" does not limit the position or order between the "fields", and "first" and "second" do not limit whether the "fields" modified by them are in the same message, nor do they limit the order of the "first field" and the "second field". For another example, if the description object is "rank", the ordinal number before "rank" in "first rank" and "second rank" does not limit the priority between "ranks". For another example, the number of description objects is not limited by ordinal numbers, and may be one or more. Taking "first device" as an example, the number of "devices" may be one or more. Furthermore, objects modified by different prefixes may be the same or different, for example, if the description object is the "device", the "first device" and the "second device" may be the same device or different devices, and the their types may be the same or different. For another example, when the description object is "information", the "first information" and the "second information" may be the same information or different information, and the their contents may be the same or different.

In some embodiments, terms such as "including A", "containing A", "for indicating A", "carrying A", may be interpreted as directly carrying A, or may be interpreted as indirectly indicating A.

In some embodiments, terms such as "time/frequency", "time-frequency domain" and the like refer to the time domain and/or the frequency domain.

In some embodiments, terms such as "in response to", "in response to determining", "in a case where", "when", "upon", "if", and the like may be replaced with each other.

In some embodiments, terms such as "greater than", "greater than or equal to", "not smaller than", "more than", "more than or equal to", "not less than", "higher", "higher than or equal to", "not lower than", "above" and the like may be replaced with each other, and terms such as "smaller than", "smaller than or equal to", "not greater than", "less than", "less than or equal to", "not more than", "lower than", "lower than or equal to", "not higher than", "below" and the like may be replaced with each other.

In some embodiments, the apparatus and the device may be interpreted as physical or virtual, and the names thereof are not limited to those described in embodiments. Terms such as "apparatus", "equipment", "device", "circuit", "network element", "node", "function", "unit", "section", "system", "network", "chip", "chip system", "entity", "body" and the like may be replaced with each other.

In some embodiments, the "network" may be interpreted as an apparatus included in the network, for example, an access network device, a core network device and the like.

In some embodiments, terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell" "carrier", "component carrier", "bandwidth part (BWP)" and the like may be replaced with each other.

In some embodiments, terms such as "terminal", "terminal device", "user equipment (UE)", "user terminal", "mobile station (MS)", "mobile terminal (MT)", subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client and the like may be replaced with each other.

In some embodiments, an access network device, a core network device, or a network device may be replaced by a terminal. For example, embodiments of the present disclosure may also be applied to structures where communication between an access network device, a core network device, or a network device and a terminal is replaced by communication between multiple terminals (e.g., device-to-device (D2D), vehicle-to-everything (V2X), etc.). In this case, the terminal may also have all or part of the functions of the access network device. In addition, terms such as "uplink", "downlink" and the like may also be replaced by terms corresponding to inter-terminal communication (e.g., "side"). For example, terms such as uplink channel, downlink channel and the like may be replaced by sidelink channel; terms such as uplink, downlink and the like may be replaced by sidelink.

In some embodiments, a terminal may be replaced by an access network device, a core network device, or a network device. In this case, the access network device, core network device, or network device may also have all or part of the functions of the terminal.

In some embodiments, obtaining data, information and the like may comply with laws and regulations of the country where it is located.

In some embodiments, data, information and the like may be obtained after obtaining the user's consent.

Further, each element, each row, or each column in the table of embodiments of the present disclosure may be implemented as an independent embodiment, and any combination of any element, any row, or any column may also be implemented as an independent embodiment.

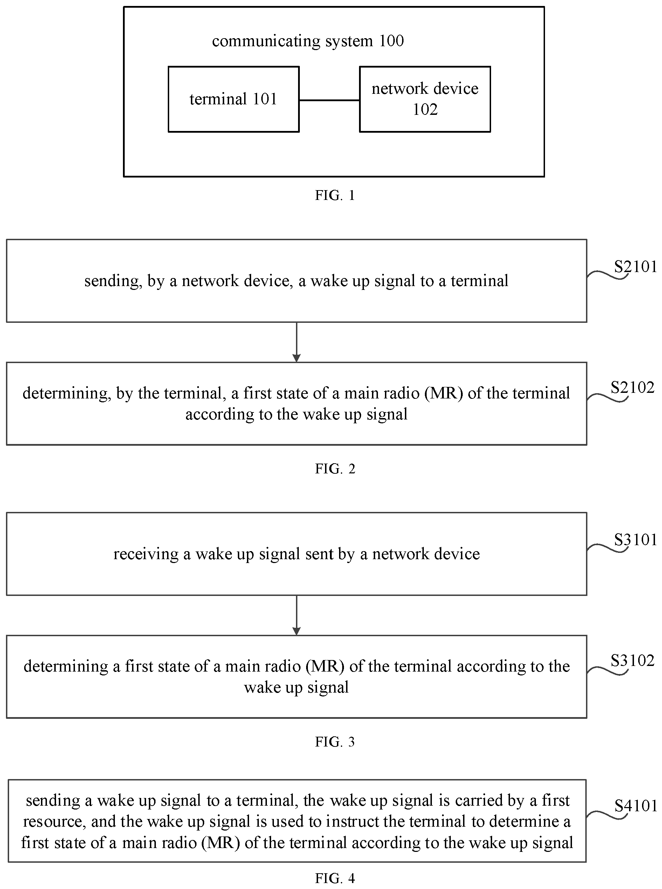

FIG. 1 is a schematic diagram illustrating an architecture of a communication system according to an embodiment of the present disclosure. As shown in FIG. 1, a communication system 100 includes a terminal 101 and a network device 102.

In some embodiments, the terminal 101 includes, for example, at least one of a mobile phone, a wearable device, an Internet of Things device, an automobile with a communication function, a smart car, a pad, a computer with a wireless transmission and reception function, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, and a wireless terminal device in smart home, which is not limited in the present disclosure.

In some embodiments, the network device 102 is, for example, a node or device that accesses a terminal to a wireless network, and the access network device may include at least one of an evolved NodeB (eNB) in a 5G communication system, a next generation eNB (ng-eNB), a next generation NodeB (gNB), a node B (NB), a home node B (HNB), a home evolved nodeB (HeNB), a radio backhaul device, a radio network controller (RNC), a base station controller (BSC), a base transceiver station (BTS), a base band unit (BBU), a mobile switching center, a base station in a 6G communication system, an open base station (RAN), a cloud base station (Cloud RAN), a base station in another communication system, and an access node in a wireless fidelity (Wi-Fi) system, which is not limited in the present disclosure.

It may be understood that the communication system described in embodiments of the present disclosure is to more clearly explain the technical solution of embodiments of the present disclosure, and does not constitute a limitation on the technical solution provided by embodiments of the present disclosure. It will be appreciated by those of ordinary skill in the art that, with the evolution of the system architecture and the emergence of new business scenarios, the technical solution provided by embodiments of the present disclosure is applicable to similar technical problems.

The following embodiments of the present disclosure may be applied to the communication system 100 illustrated in FIG. 1 or a part of the entity, which is not limited in embodiments of the present disclosure. Each entity shown in FIG. 1 is an example, and the communication system may include all or some of the entities shown in FIG. 1, or other entities other than those shown in FIG. 1. The number and form of the entities are arbitrary, each entity may be physical or virtual, the connection relationship between the entities is an example, the entities may not be connected or connected, and the connection may be any form, including direct connection or indirect connection, wired connection or wireless connection.

Embodiments of the present disclosure may be applied to long term evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), future radio access (FRA), new-radio access technology (RAT), new radio (NR), new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), and IEEE 802.20, ultra-wideband (UWB), Bluetooth (registered trademark), public land mobile network (PLMN) networks, device-to-device (D2D) systems, machine-to-machine (M2M) systems, Internet of Things (IoT) systems, vehicle-to-everything (V2X) systems, systems utilizing other communication methods, and next-generation systems built upon them and the like. Moreover, multiple systems may be combined (e.g., a combination of LTE or LTE-A with 5G) for application.

In some embodiments, an LP-WUR and an MR are configured in the terminal, and an LP-WUS sent by the network device is received via the LP-WUR, in which the LP-WUS is used to instruct the MR of the terminal to switch between any two sleep states, and may also instruct the terminal whether to wake up or not. In a case where the terminal receives the LP-WUS, the LP-WUS instructs the terminal to switch to a wake up state, and the MR is enabled to receive and process downlink and/or uplink signals. In a case where the terminal does not receive the LP-WUS, or the LP-WUS instructs the terminal not to wake up, the terminal will maintain the current sleep state of the MR. There are four sleep states of the MR: ultra-deep sleep, deep sleep, light sleep, and micro sleep. The sleep depth of each sleep state in the foregoing sleep states satisfies: ultra-deep sleep > deep sleep > light sleep > micro sleep.

In some embodiments, the LP-WUR has two working modes: one is an always ON mode, and the other is a duty cycle mode. For the always ON mode, the LP-WUR of the terminal is always in the on state, and the base station may send the LP-WUS to wake up the terminal at any time. For the duty cycle mode, the terminal turns on the LP-WUR only within a monitoring time window of the LP-WUS according to a preset mechanism, and the base station may send the LP-WUS to wake up the terminal only within this duration. Furthermore, according to different supported signal types, the LP-WUR in the terminal may be divided into two categories, and the LP-WUR may support at least any one of the following types: a receiver that only supports envelope detection of an OOK (On-and-Off Keying) symbol of the LP-WUS, hereinafter referred to as OOK LR; a receiver that supports detecting a time domain sequence or a frequency domain sequence carried by the OOK symbol corresponding to the LP-WUS, hereinafter referred to as OFDM LR. For example, the link performance of OFDM LR is better than that of OOK LR.

In some embodiments, in a case of detecting the LP-WUS, the terminal needs to obtain the synchronization of the time domain and the frequency domain via a synchronization signal, and then obtain a time-frequency position of the network device transmitting the LP-WUS. The synchronization signal may be a primary synchronization signal (PSS) and/or a secondary synchronization signal (SSS), or a low power synchronization signal (LP-SS).

In some embodiments, the network device may carry LP-WUS information via amplitude shift keying (ASK) modulation, in which OOK modulation is a special case of the ASK modulation. Taking OOK as an example, an OOK ON symbol and an OOK OFF symbol represent different bits. For example, OOK ON is used to represent bit 1, and OOK OFF is used to represent bit 0. Optionally, after the LP-WUS information is encoded, each encoded bit is mapped to one OOK symbol. For example, Manchester coding is adopted for the OOK modulation. For 1/2-rate Manchester coding, an information bit 1 may be mapped to 2 coded bits; for 1/4-rate Manchester coding, an information bit 1 may be mapped to 4 coded bits; for 1/8-rate Manchester coding, an information bit 1 may be mapped to 8 coded bits; for 1/16-rate Manchester coding, an information bit 1 may be mapped to 16 coded bits. As an example, the wake up signal may also be carried by the time domain sequence or the frequency domain sequence carried by each OOK symbol.

In some embodiments, there are multiple manners for the LP-WUS to carry information: the wake up signal may be carried through OOK modulation, and the wake up signal may also be carried through the time domain sequence/the frequency domain sequence carried by the LP-WUS symbol. For the latter manner, a preamble of the LP-WUS may serve as a time-frequency resource for carrying the time domain sequence/the frequency domain sequence. How to carry information via the time domain sequence/the frequency domain sequence in a preamble symbol of the LP-WUS to improve the detection performance of OOK LR and OFDM LR is a technical problem to be urgently solved.

FIG. 2 is an interactive schematic diagram illustrating a communication method according to an embodiment of the present disclosure. As shown in FIG. 2, the communication method involved in embodiments of the present disclosure is performed by a terminal and a network device, and includes the following steps.

In step S201, the network device sends a wake up signal to the terminal.

In some embodiments, the wake up signal includes a first resource, and the first resource carries the wake up signal.

In some embodiments, the wake up signal includes at least one of a preamble, data or a check code. For example, in one implementation, the wake up signal includes the preamble, the data, and the check code; in another implementation, the wake up signal includes the preamble and the data; in a further implementation, the wake up signal includes any one of the preamble, the data, and the check code.

In some embodiments, a duration of the wake up signal is a first duration, a duration of the preamble is a second duration, a duration of the data is a third duration, and a duration of the check code is a fourth duration,
in which the second duration is less than or equal to the first duration;
the third duration is less than or equal to the first duration; and
the fourth duration is less than or equal to the first duration.

In some embodiments, the first duration, the second duration, the third duration and the fourth duration are determined by any one of:
first protocol information;
first information sent by the network device, in which the first information is semi-static configuration information; or
second information sent by the network device, in which the second information is dynamic configuration information.

For example, in this embodiment, the network device periodically sends the wake up signal to the terminal, the duration of the wake up signal is the first duration D, and a wake up receiver configured on the terminal needs to receive the wake up signal within the first duration D. The first duration D of the wake up signal may be predefined by a protocol, pre-configured to the terminal by the network device in a semi-static configuration manner, or dynamically indicated by the network device via configuration information. The wake up signal in this embodiment includes the preamble, the duration of the preamble is the second duration d1, in which the second duration d1 may be predefined by the protocol, semi-statically configured by the network device, or dynamically indicated by the network device, and the second duration d1 is less than or equal to the first duration D. The wake up signal includes the data, the duration of the data is the third duration d2, in which the third duration d2 may be predefined by the protocol, semi-statically configured by the network device, or dynamically indicated by the network device, and the third duration d2 is less than or equal to the first duration D. The wake up signal includes the check code, the duration of the check code is the fourth duration d3, in which the fourth duration d3 may be predefined by the protocol, semi-statically configured by the network device, or dynamically indicated by the network device, and the fourth duration d3 is no greater than the first duration D.

In some embodiments, the first resource includes at least one of:
a first symbol, in which the first symbol is an OOK modulation symbol; or
a first sequence, in which the first sequence is a time domain sequence or a frequency domain sequence.

For example, in this embodiment, to avoid the impact of other interference signals on the wake up signal during the communication process between the network device and the terminal, the first resource is used to carry the wake up signal. The first resource may be the OOK modulation symbol. For example, bit 1 is used to represent OOK ON, and bit 0 is used to represent OOK OFF. The wake up signal is determined as wake up state information or sleep state information according to the OOK modulation symbol: if the OOK modulation symbol is OOK ON, the terminal switches from a sleep state to a wake up state based on the wake up signal carried by the first resource; if the OOK modulation symbol is OOK OFF, the terminal switches from the wake up state to the sleep state based on the wake up signal carried by the first resource. The first resource may also be the first sequence, and in this embodiment, the wake up signal is carried via the time domain sequence or the frequency domain sequence. The first resource may also be the first sequence and the first symbol. For example, the wake up signal may include multiple parts, such as one or more of the preamble, the data, and the check code, and the first sequence and/or the first symbol are used to carry one or more parts of information in the wake up signal. For example, the preamble in the wake up signal is carried by the first sequence, and the data in the wake up signal is carried by the first symbol.

In some embodiments, the wake up signal includes the preamble, and the first symbol and/or the first sequence carry the wake up signal within the second duration of the preamble. For example, in this embodiment, the wake up signal sent by the network device includes the preamble, and within the second duration corresponding to the preamble, the first symbol or the first sequence is used to carry the wake up signal. For a terminal that supports the first symbol or the first sequence, the wake up signal may be determined according to the preamble within the duration d1, without parsing the wake up signal within a duration D-d1, improving the wake up efficiency of the terminal.

Optionally, in some implementations, a difference between the first duration and the second duration is a remaining duration, the wake up signal is carried within the remaining duration, and the remaining duration is the third duration, or the remaining duration is a sum of the third duration and the fourth duration. For example, information carried in the duration D-d1 is W, and the duration D-d1 may be the third duration which is the duration of the data. At this time, the data is used to carry the wake up signal W in the duration D-d1. For a terminal that does not support the first symbol or the first sequence, if the wake up signal is not detected in the duration d1, the wake up signal carried by the data is identified by detecting the data in the duration D-d1 to perform state switching. Optionally, the duration D-d1 is the sum of the third duration of the data and the fourth duration of the check code, that is, D-d1=d2+d3. At this time, the data and the check code are used to carry the wake up signal in the duration D-d1.

In some embodiments, the wake up signal includes the preamble, the first symbol or the first sequence carries first subset information within the second duration of the preamble, and the first subset information is a subset of the wake up signal. For example, in this embodiment, the wake up signal includes multiple parts of information, and the wake up signal includes the preamble. Within the second duration d1 of the preamble, the first symbol or the first sequence carries the first subset information A, and the first subset information A is the subset of the wake up signal W. That is, the preamble carries the subset A of the wake up signal, and the subset may be carried by the first symbol or the first sequence.

Optionally, in some implementations, the difference between the first duration and the second duration is the remaining duration, second subset information is carried within the remaining duration, the second subset information is the subset of the wake up signal, and a sum of the second subset information and the first subset information is the wake up signal; and the remaining duration is the third duration, or the remaining duration is a sum of the third duration and the fourth duration. In this embodiment, within the second duration d1 of the preamble of the wake up signal, the terminal obtains the first subset information A of the wake up signal by detecting the first symbol or the first sequence, and then within the remaining duration D-d1, obtains the second subset information W-A of the wake up signal by detecting the data and/or the check code. The first subset information A and the second subset information W-A are combined to obtain the wake up signal of the terminal.

For example, the second subset information W-A is carried within the remaining duration D-d1, the second subset information W-A is the subset of the wake up signal W, the sum of the second subset information W-A and the first subset information A is the wake up signal W, and the definition of the remaining duration D-d1 is the same as that in the foregoing embodiments. Reference is made to the foregoing embodiments, and repeated description is omitted here.

In some embodiments, the wake up signal includes the preamble, and the first sequence carries the first subset information within the second duration of the preamble, in which the first subset information is the subset of the wake up signal. For example, in this embodiment, the first sequence is used to carry the first subset information A within the second duration d1 corresponding to the preamble, and the first subset information A is the subset of the wake up signal W.

Optionally, in some implementations, the difference between the first duration and the second duration is the remaining duration, within the remaining duration, the first symbol carries the wake up signal, and the first sequence carries the second subset information; the second subset information is the subset of the wake up signal, and the sum of the second subset information and the first subset information is the wake up signal; and the remaining duration is the third duration, or the remaining duration is the sum of the third duration and the fourth duration. In this embodiment, within the remaining duration, the terminal may detect the wake up signal based on the first symbol, and may also detect the first sequence to obtain the second subset information W-A. The first subset information A and the second subset information W-A are combined to obtain the wake up signal of the terminal. That is, in this embodiment, for a terminal that supports sequence detection and symbol detection, the wake up signal may be obtained by detecting a symbol in the duration D-d1; the first subset information A may also be detected in the duration d1; the second subset information W-A may be obtained in the duration D-d1; and the first subset information and the second subset information are combined to obtain the wake up signal.

For example, within the duration D-d1, the first symbol is used to carry the wake up signal W, the first sequence is used to carry the second subset information W-A, the sum of the second subset information W-A and the first subset information A is the wake up signal W, and the definition of the remaining duration D-d1 is the same as that in the foregoing embodiments. Reference is made to the foregoing embodiments, and repeated description is omitted here.

In some embodiments, the wake up signal includes the preamble. The first sequence carries the first subset information within the second duration of the preamble, in which the first subset information is the subset of the wake up signal. The difference between the first duration and the second duration is the remaining duration, within the remaining duration, the first symbol carries the second subset information, and the first sequence carries the second subset information; the second subset information is the subset of the wake up signal, and the sum of the second subset information and the first subset information is the wake up signal; and the remaining duration is the third duration, or the remaining duration is the sum of the third duration and the fourth duration. For example, in this embodiment, the first sequence is used to carry the first subset information A within the duration d1 of the preamble, and the first subset information A is the subset of the wake up signal W. Within the duration D-d1, the first symbol is used to carry the second subset information W-A, or the first sequence is used to carry the second subset information W-A. The definition of the remaining duration D-d1 is the same as that in the foregoing embodiments, reference is made to the foregoing embodiments, and repeated description is omitted here.

In some embodiments, the wake up signal includes the preamble, and the first sequence carries the wake up signal within the second duration of the preamble. For example, the wake up signal in this embodiment includes the preamble, and the first sequence is used to carry the wake up signal within the second duration d1 of the preamble.

Optionally, in some implementations, the difference between the first duration and the second duration is the remaining duration, within the remaining duration, the first symbol carries the wake up signal, and the first sequence carries the wake up signal; and the remaining duration is the third duration, or the remaining duration is a sum of the third duration and the fourth duration. For example, within the duration D-d1, the first symbol is used to carry the wake up signal W, and the first sequence is used to carry the wake up signal W. The definition of the remaining duration D-d1 is the same as that in the foregoing embodiments, reference is made to the foregoing embodiments, and repeated description is omitted here.

In some embodiments, the wake up signal includes the preamble. The first sequence carries the first subset information within the second duration of the preamble, in which the first subset information is the subset of the wake up signal. The difference between the first duration and the second duration is the remaining duration, within the remaining duration, the first sequence carries the second subset information, and the first symbol carries the third subset information; the second subset information and the third subset information are each the subset of the wake up signal, and the third subset information, the second subset information and the first subset information constitute the wake up signal; and the remaining duration is the third duration, or the remaining duration is the sum of the third duration and the fourth duration. In this embodiment, the terminal is a terminal that supports the symbol detection and the sequence detection. The terminal obtains the first subset information A by detecting the first sequence within the duration d1, obtains the second subset information B by detecting the first sequence within the duration D-d1, and obtains the third subset information W-A-B by detecting the first symbol within the duration D-d1. The first subset information, the second subset information and the third subset information are combined to obtain the wake up signal of the terminal.

For example, within the duration d1 of the preamble corresponding to the wake up signal in this embodiment, the first sequence is used to carry the first subset information A, in which the first subset information is the subset of the wake up signal W. Within the duration D-d1, the first sequence is used to carry the second subset information B, and the first symbol is used to carry the third subset information W-A-B. The second subset information B and the third subset information W-A-B are each the subset of the wake up signal W. The first subset information A + the second subset information B + the third subset information W-A-B = the wake up signal W. The definition of the remaining duration D-d1 is the same as that in the foregoing embodiments, reference is made to the foregoing embodiments, and repeated description is omitted here.

In some embodiments, the wake up signal includes the preamble. The first sequence carries the first subset information within the second duration of the preamble, in which the first subset information is the subset of the wake up signal. The difference between the first duration and the second duration is the remaining duration, within the remaining duration, the first symbol carries the first subset information, and the first sequence carries second subset information; the first subset information and the second subset information are each the subset of the wake up signal, and the sum of the second subset information and the first subset information is the wake up signal; and the remaining duration is the third duration, or the remaining duration is the sum of the third duration and the fourth duration. For example, within the duration d1 of the preamble corresponding to the wake up signal in this embodiment, the first sequence is used to carry the first subset information W-B. Within the duration D-d1, the first symbol is used to carry the first subset information W-B, and the first sequence is used to carry the second subset information B. The first subset information W-B and the second subset information B are each the subset of the wake up signal W, and the sum of the first subset information W-B and the second subset information B is the wake up signal W. The definition of the remaining duration D-d1 is the same as that in the foregoing embodiments, reference is made to the foregoing embodiments, and repeated description is omitted here.

In some embodiments, the wake up signal includes the preamble. The first sequence carries the first subset information within the second duration of the preamble, in which the first subset information is the subset of the wake up signal. The difference between the first duration and the second duration is the remaining duration, within the remaining duration, the first symbol carries the wake up signal, and the first sequence carries the first subset information; and the remaining duration is the third duration, or the remaining duration is the sum of the third duration and the fourth duration. For example, within the duration d1 of the preamble corresponding to the wake up signal in this embodiment, the first sequence is used to carry the first subset information A. Within the duration D-d1, the first symbol is used to carry the wake up signal W, and the first sequence is used to carry the first subset information A. The definition of the remaining duration D-d1 is the same as that in the foregoing embodiments, reference is made to the foregoing embodiments, and repeated description is omitted here.

In some embodiments, the wake up signal includes the preamble. The first sequence carries the first subset information within the second duration of the preamble, in which the first subset information is the subset of the wake up signal. The difference between the first duration and the second duration is the remaining duration, within the remaining duration, the first symbol carries the second subset information, and the first sequence carries the first subset information; the second subset information is the subset of the wake up signal; and the remaining duration is the third duration, or the remaining duration is the sum of the third duration and the fourth duration. For example, within the duration d1 of the preamble corresponding to the wake up signal in this embodiment, the first sequence is used to carry the first subset information A, in which the first subset information A is the subset of the wake up signal W. Within the duration D-d1, the first symbol is used to carry the second subset information W-A, and the first sequence is used to carry the first subset information A. The second subset information W-A and the first subset information A are each the subset of the wake up signal W. The definition of the remaining duration D-d1 is the same as that in the foregoing embodiments, reference is made to the foregoing embodiments, and repeated description is omitted here.

In some embodiments, the second duration includes a first sub-duration and a second sub-duration, the first sequence is a target sequence within the first sub-duration, and the first sequence carries the wake up signal within the second sub-duration. The target sequence may be predefined by a protocol or configured to the terminal by a base station. For example, in this embodiment, the first duration includes the preamble, and within the first duration d1 of the preamble, the duration d1 may be divided into the first sub-duration d1a and the second sub-duration d1b. The first sequence includes the target sequence within the first sub-duration d1a. For example, the time domain sequence or frequency domain sequence of the OOK symbol adopted in the first sub-duration d1a is a fixed sequence predefined by the protocol, and the synchronization performance of the wake up signal is enhanced via the fixed sequence. Within the duration d1b, the first sequence is used to carry the wake up signal.

In step S2102, the terminal determines a first state of the MR of the terminal according to the wake up signal.

For example, in some implementations, the first state of the MR of the terminal includes an ultra-deep sleep state, a deep sleep state, a light sleep state, and a micro sleep state. The sleep depth of the above sleep states satisfies: ultra-deep sleep state > deep sleep state > light sleep state > micro sleep state.

In some embodiments, the wake up signal may instruct the MR of the terminal to switch between any two sleep states, and may also instruct the terminal whether to wake up or not. In a case where the terminal receives the wake up signal that indicates a wake up operation, the MR is enabled to receive and process downlink and/or uplink signals. In a case where the wake up signal does not indicate the wake up operation, the terminal will maintain the current sleep state of the MR.

In some embodiments, the names of information and the like are not limited to the names described in embodiments. Terms such as "information", "message", "signal", "signaling", "report", "configuration", "indication", "instruction", "command", "channel", "parameter", "domain", "field", "symbol", "symbol", "codebook", "codeword", "codepoint", "bit", "data", "program", "chip" may be replaced with each other.

In some embodiments, terms such as "codebook", "codeword" and "precoding matrix" may be replaced with each other. For example, a codebook may be a set of one or more codewords/precoding matrices.

In some embodiments, terms such as "up", "uplink" and "physical uplink" may be replaced with each other; terms such as "down", "downlink" and "physical downlink" may be replaced with each other; terms such as "side", "sidelink", "side communication", "sidelink communication", "direct link", "direct link communication" may be replaced with each other.

In some embodiments, terms such as "physical downlink shared channel (PDSCH)" and "DL data" may be replaced with each other; terms such as "physical uplink shared channel (PUSCH)" and "UL data" may be replaced with each other.

In some embodiments, terms such as "radio", "wireless", "radio access network (RAN)", "access network (AN)" and "RAN-based" may be replaced with each other.

In some embodiments, terms such as "synchronization signal (SS)", "synchronization signal block (SSB)", "reference signal (RS)", "pilot" and "pilot signal" may be replaced with each other.

In some embodiments, terms such as "time instant", "time point", "time", "time location" may be replaced with each other, and terms such as "time duration", "duration", "time window", "window", "time" may be replaced with each other.

In some embodiments, a measurement unit of "duration" may be an absolute time unit or a relative time unit. The absolute time unit includes hour, minute, second, millisecond, microsecond, nanosecond and the like. The relative time unit includes radio frame, radio half-frame, radio subframe, slot, mini-slot, time-domain symbol, or other newly defined OOK time-domain symbols and the like. The OOK symbol is less than or equal to one time-domain symbol, and one time-domain symbol is an integer multiple of the OOK symbol.

In some embodiments, terms such as "resource block (RB)", "physical resource block (PRB)", "sub-carrier group (SCG)", "resource element group (REG)", "PRB pair", "RB pair", "resource element (RE)", "sub-carrier" may be replaced with each other.

In some embodiments, terms such as "wireless access scheme", "waveform" may be replaced with each other.

In some embodiments, terms such as "precoding", "precoder", "weight", "precoding weight", "quasi-co-location (QCL)", "transmission configuration indication (TCI) state", "spatial relation", "spatial domain filter", "transmission power", "phase rotation", "antenna port", "antenna port group", "layer", "the number of layers", "rank", "resource", "resource set", "resource group", "beam", "beam width", "beam angular degree", "antenna", "antenna element", "panel" may be replaced with each other.

In some embodiments, terms such as "acquire", "obtain", "get", "receive", "transmit", "bidirectional transmission", "send and/or receive" may be replaced with each other, and these terms may be interpreted as having multiple meanings including receiving from another entity, obtaining from a protocol, obtaining from an upper layer, obtaining from a self-processing, implementing autonomously and the like.

In some embodiments, terms such as "send", "transmit", "report", "deliver", "transmit", "bidirectional transmission", "send and/or receive" may be replaced with each other.

In some embodiments, terms such as "certain", "preset", "predefined", "set", "indicated", "a given", "arbitrary", and "first" may be replaced with each other. "Certain A", "preset A", "predefined A", "set A", "indicated A", "a given A", "arbitrary A", and "first A" may be interpreted as A specified in advance in protocols or the like, may also be interpreted as A obtained through setting, configuration, or indication, and may further be interpreted as a certain A, a given A, an arbitrary A, or a first A, which is not limited in embodiments of the present disclosure.

In some embodiments, the determination or judgment may be performed using a 1-bit value (0 or 1), may also be performed using a true/false value (boolean) represented by "true" or "false", and may further be performed through numerical comparison (for example, comparison with a preset value), which is not limited in embodiments of the present disclosure.

In some embodiments, "not expecting to receive" may be interpreted as not receiving data on a time domain resources and/or a frequency domain resource, or may be interpreted as not performing subsequent processing on the data or the like after receiving the data or the like. "Not expecting to send" may be interpreted as not sending, or may be interpreted as sending but not expecting the receiver to respond to the sent content.

In the above-mentioned manner, the network device sends the wake up signal to the terminal, and the terminal receives the wake up signal sent by the network device. The wake up signal includes the first resource, in which the first resource carries the wake up signal, and the first state of the MR of the terminal is determined according to the wake up signal. The wake up signal is carried via the first resource, and the wake up signal detected by the terminal is made more accurate based on the first resource, improving the detection performance of the wake up receiver in the terminal.

FIG. 3 is a flowchart illustrating a communication method according to an embodiment of the present disclosure. As shown in FIG. 3, the communication method involved in embodiments of the present disclosure is performed by a terminal, and includes the following steps.

In step S3101, a wake up signal sent by a network device is received.

In some embodiments, the wake up signal includes a first resource, and the first resource carries the wake up signal.

In some embodiments, the wake up signal includes at least one of a preamble, data or a check code.

In some embodiments, a duration of the wake up signal is a first duration, a duration of the preamble is a second duration, a duration of the data is a third duration, and a duration of the check code is a fourth duration,
in which the second duration is less than or equal to the first duration;
the third duration is less than or equal to the first duration; and
the fourth duration is less than or equal to the first duration.

In some embodiments, the first duration, the second duration, the third duration and the fourth duration are determined by any one of:
first protocol information;
first information sent by the network device, in which the first information is semi-static configuration information; or
second information sent by the network device, in which the second information is dynamic configuration information.

In some embodiments, the first resource includes at least one of:
a first symbol, in which the first symbol is an OOK modulation symbol; or
a first sequence, in which the first sequence is a time domain sequence or a frequency domain sequence.

In some embodiments, the wake up signal includes the preamble, and the first symbol and/or the first sequence carry the wake up signal within the second duration of the preamble.

In some embodiments, a difference between the first duration and the second duration is a remaining duration, the wake up signal is carried within the remaining duration, and the remaining duration is the third duration, or the remaining duration is a sum of the third duration and the fourth duration.

In some embodiments, the wake up signal includes the preamble, the first symbol or the first sequence carries first subset information within the second duration of the preamble, and the first subset information is a subset of the wake up signal.

In some embodiments, the difference between the first duration and the second duration is the remaining duration, second subset information is carried within the remaining duration, the second subset information is the subset of the wake up signal, and a sum of the second subset information and the first subset information is the wake up signal; and the remaining duration is the third duration, or the remaining duration is the sum of the third duration and the fourth duration.

In some embodiments, the wake up signal includes the preamble, the first sequence carries the first subset information within the second duration of the preamble, and the first subset information is the subset of the wake up signal.

In some embodiments, the difference between the first duration and the second duration is the remaining duration, within the remaining duration, the first symbol carries the wake up signal, and the first sequence carries second subset information; the second subset information is the subset of the wake up signal, and the sum of the second subset information and the first subset information is the wake up signal; and the remaining duration is the third duration, or the remaining duration is the sum of the third duration and the fourth duration.

In some embodiments, the difference between the first duration and the second duration is the remaining duration, within the remaining duration, the first symbol carries the second subset information, and the first sequence carries the second subset information; the second subset information is the subset of the wake up signal, and the sum of the second subset information and the first subset information is the wake up signal; and the remaining duration is the third duration, or the remaining duration is the sum of the third duration and the fourth duration.

In some embodiments, the wake up signal includes the preamble, the first sequence carries the wake up signal within the second duration of the preamble.

In some embodiments, the difference between the first duration and the second duration is the remaining duration, within the remaining duration, the first symbol carries the wake up signal, and the first sequence carries the wake up signal; and the remaining duration is the third duration, or the remaining duration is the sum of the third duration and the fourth duration.

In some embodiments, the difference between the first duration and the second duration is the remaining duration, within the remaining duration, the first sequence carries the second subset information, and the first symbol carries third subset information; the second subset information and the third subset information are each the subset of the wake up signal, and the third subset information, the second subset information and the first subset information constitute the wake up signal; and the remaining duration is the third duration, or the remaining duration is the sum of the third duration and the fourth duration.

In some embodiments, the difference between the first duration and the second duration is the remaining duration, within the remaining duration, the first symbol carries the first subset information, and the first sequence carries the second subset information; the first subset information and the second subset information are each the subset of the wake up signal, and the sum of the second subset information and the first subset information is the wake up signal; and the remaining duration is the third duration, or the remaining duration is the sum of the third duration and the fourth duration.

In some embodiments, the difference between the first duration and the second duration is the remaining duration, within the remaining duration, the first symbol carries the wake up signal, and the first sequence carries the first subset information; and the remaining duration is the third duration, or the remaining duration is the sum of the third duration and the fourth duration.

In some embodiments, the difference between the first duration and the second duration is the remaining duration, within the remaining duration, the first symbol carries the second subset information, and the first sequence carries the first subset information; the second subset information is the subset of the wake up signal; and the remaining duration is the third duration, or the remaining duration is the sum of the third duration and the fourth duration.

In some embodiments, the second duration includes a first sub-duration and a second sub-duration, the first sequence carries a target sequence within the first sub-duration, and the first sequence carries the wake up signal within the second sub-duration.

In the embodiments of the present disclosure, for the relevant implementations of step S3101, reference may be made to the embodiments described in the foregoing step S2101, which is not repeated herein.

In step S3102, a first state of an MR of the terminal is determined according to the wake up signal.

In the embodiments of the present disclosure, for the relevant implementation manners of step S3102, reference may be made to the embodiments described in the foregoing step S2102, which is not repeated herein.

In the above technical solution, the wake up signal sent by the network device is received, the wake up signal includes the first resource, the first resource carries the wake up signal, and the first state of the MR of the terminal is determined according to the wake up signal. The wake up signal is carried via the first resource, and the wake up signal detected by the terminal is made more accurate based on the first resource, improving the detection performance of the wake up receiver in the terminal.

FIG. 4 is a flowchart illustrating a communication method according to an embodiment of the present disclosure. As shown in FIG. 4, the communication method involved in embodiments of the present disclosure is performed by a network device, and includes the following step.

In step S4101, a wake up signal is sent to a terminal, in which the wake up signal includes a first resource, the first resource carries the wake up signal, and the wake up signal instructs the terminal to determine a first state of an MR of the terminal according to the wake up signal.

In some embodiments, the wake up signal includes at least one of a preamble, data or a check code.

In some embodiments, a duration of the wake up signal is a first duration, a duration of the preamble is a second duration, a duration of the data is a third duration, and a duration of the check code is a fourth duration,
in which the second duration is less than or equal to the first duration;
the third duration is less than or equal to the first duration; and
the fourth duration is less than or equal to the first duration.

In some embodiments, the first duration, the second duration, the third duration and the fourth duration are determined by any one of:
first protocol information;
first information sent by the network device, in which the first information is semi-static configuration information; or
second information sent by the network device, in which the second information is dynamic configuration information.

In some embodiments, the first resource includes at least one of:
a first symbol, in which the first symbol is an OOK modulation symbol; or
a first sequence, in which the first sequence is a time domain sequence or a frequency domain sequence.

In some embodiments, the wake up signal includes the preamble, and the first symbol and/or the first sequence carry the wake up signal within the second duration of the preamble.

In some embodiments, a difference between the first duration and the second duration is a remaining duration, the wake up signal is carried within the remaining duration, and the remaining duration is the third duration, or the remaining duration is a sum of the third duration and the fourth duration.

In some embodiments, the wake up signal includes the preamble, the first symbol and/or the first sequence carries first subset information within the second duration of the preamble, and the first subset information is a subset of the wake up signal.

In some embodiments, the difference between the first duration and the second duration is the remaining duration, second subset information is carried within the remaining duration, the second subset information is the subset of the wake up signal, and a sum of the second subset information and the first subset information is the wake up signal; and the remaining duration is the third duration, or the remaining duration is the sum of the third duration and the fourth duration.

In some embodiments, the wake up signal includes the preamble, the first sequence carries the first subset information within the second duration of the preamble, and the first subset information is the subset of the wake up signal.

In some embodiments, the difference between the first duration and the second duration is the remaining duration, within the remaining duration, the first symbol carries the wake up signal, and the first sequence carries second subset information; the second subset information is the subset of the wake up signal, and the sum of the second subset information and the first subset information is the wake up signal; and the remaining duration is the third duration, or the remaining duration is the sum of the third duration and the fourth duration.

In some embodiments, the difference between the first duration and the second duration is the remaining duration, within the remaining duration, the first symbol carries the second subset information, and the first sequence carries the second subset information; the second subset information is the subset of the wake up signal, and the sum of the second subset information and the first subset information is the wake up signal; and the remaining duration is the third duration, or the remaining duration is the sum of the third duration and the fourth duration.

In some embodiments, the wake up signal includes the preamble, the first sequence carries the wake up signal within the second duration of the preamble.

In some embodiments, the difference between the first duration and the second duration is the remaining duration, within the remaining duration, the first symbol carries the wake up signal, and the first sequence carries the wake up signal; and the remaining duration is the third duration, or the remaining duration is the sum of the third duration and the fourth duration.

In some embodiments, the difference between the first duration and the second duration is the remaining duration, within the remaining duration, the first sequence carries the second subset information, and the first symbol carries third subset information; the second subset information and the third subset information are each the subset of the wake up signal, and the third subset information, the second subset information and the first subset information constitute the wake up signal; and the remaining duration is the third duration, or the remaining duration is the sum of the third duration and the fourth duration.

In some embodiments, the difference between the first duration and the second duration is the remaining duration, within the remaining duration, the first symbol carries the first subset information, and the first sequence carries the second subset information; the first subset information and the second subset information are each the subset of the wake up signal, and the sum of the second subset information and the first subset information is the wake up signal; and the remaining duration is the third duration, or the remaining duration is the sum of the third duration and the fourth duration.

In some embodiments, the difference between the first duration and the second duration is the remaining duration, within the remaining duration, the first symbol carries the wake up signal, and the first sequence carries the first subset information; and the remaining duration is the third duration, or the remaining duration is the sum of the third duration and the fourth duration.

In some embodiments, the difference between the first duration and the second duration is the remaining duration, within the remaining duration, the first symbol carries the second subset information, and the first sequence carries the first subset information; the second subset information is the subset of the wake up signal; and the remaining duration is the third duration, or the remaining duration is the sum of the third duration and the fourth duration.

In some embodiments, the second duration includes a first sub-duration and a second sub-duration, the first sequence includes a target sequence within the first sub-duration, and the first sequence carries the wake up signal within the second sub-duration.

In the embodiments of the present disclosure, for the relevant implementations of step S4101, reference may be made to the embodiments described in the foregoing step S2101, which is not repeated herein.

In the above technical solution, the network device sends the wake up signal, the wake up signal includes the first resource, the first resource carries the wake up signal, and the wake up signal instructs the terminal to determine the first state of the MR of the terminal according to the wake up signal. The wake up signal is carried via the first resource, and the wake up signal detected by the terminal is made more accurate based on the first resource, improving the detection performance of the wake up receiver in the terminal.

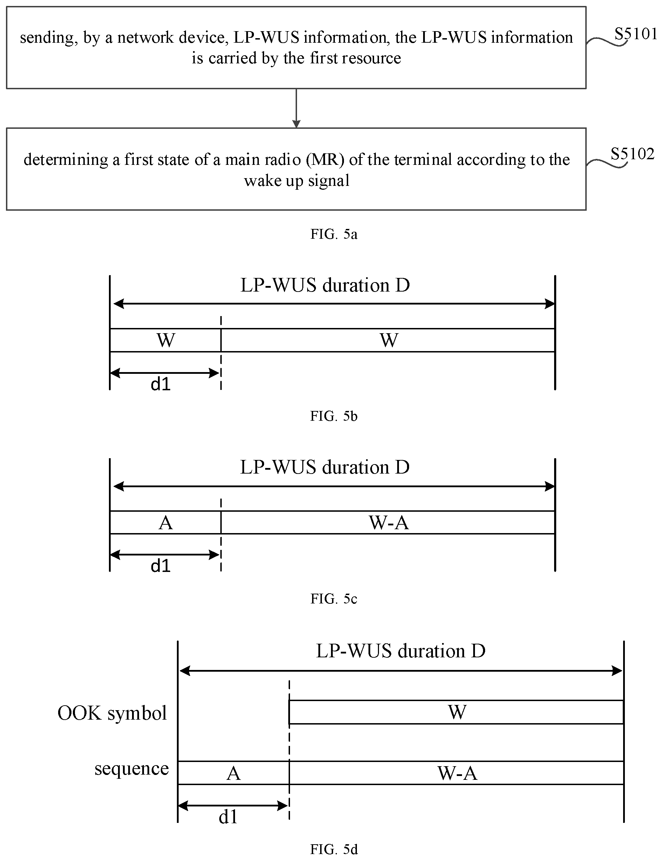

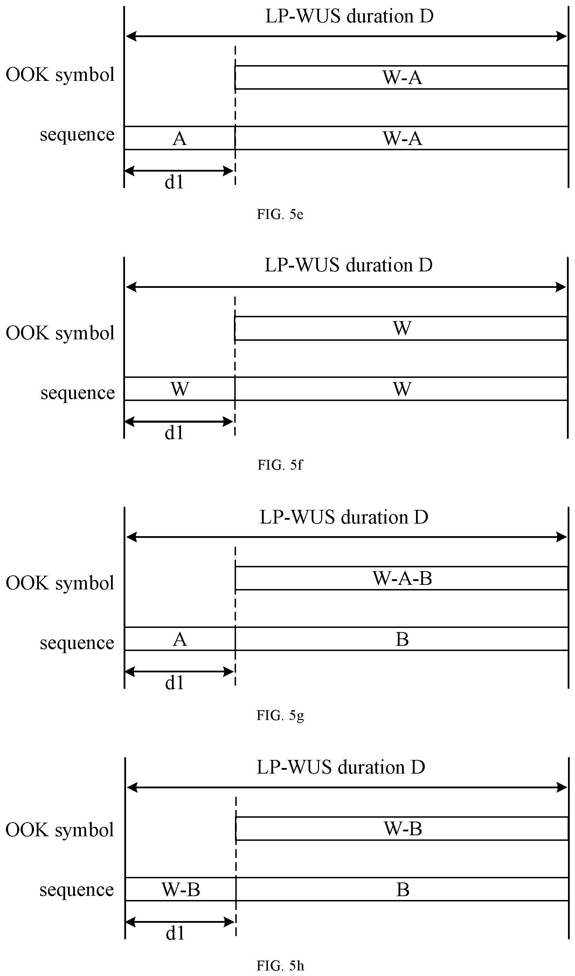

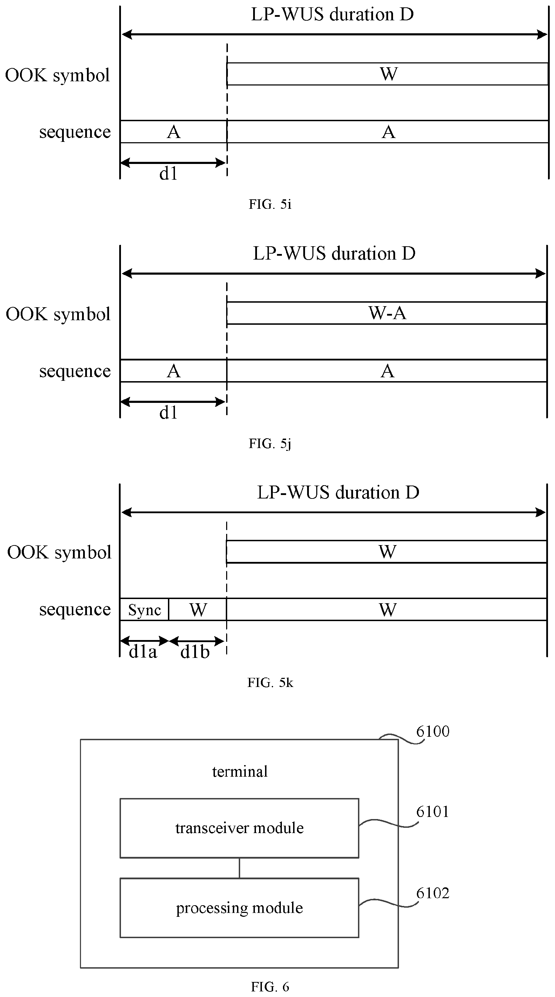

FIG. 5a is a schematic diagram illustrating a communication method according to an embodiment of the present disclosure. As shown in FIG. 5, the communication method involved in embodiments of the present disclosure is performed by a network device and a terminal, and includes the following steps.

In step S5101, the network device sends LP-WUS information, in which the LP-WUS information is carried by a first resource.

In some embodiments, in a network communication system, the network device may wake up a terminal supporting an LP-WUS in a cell or change a sleep state of the terminal by sending the LP-WUS information. For the terminal supporting the LP-WUS, at least one LP-WUS is received via the LP-WUR configured in the terminal, and the wake-up of the MR or the change of the sleep state is completed according to information carried in the LP-WUS. The change of the MR sleep state refers to that the MR in the terminal switches between states such as ultra-deep sleep, deep sleep, light sleep, and micro sleep. The change of a wake up state of the MR refers to that the MR switches from any of the above sleep states to the wake up state. For example, before receiving the LP-WUS, the terminal receives an LP-SS sent by the network device via the LP-WUR, and determines auxiliary information of the LP-WUS via the LP-SS. For example, the auxiliary information may include time-frequency synchronization information, cell ID information, etc., which is not limited in this embodiment. The network device may indicate the LP-SS to the terminal via a protocol-defined configuration or indication information, and the terminal may monitor the LP-SS according to the protocol-predefined configuration or the configuration information.

In some embodiments, an LP-WUS in a communication system includes at least one of preamble, data, and cyclic redundancy check (CRC). For example, the LP-WUS may include the preamble, the data and the CRC. For another example, the LP-WUS may include the preamble and the data. For a further example, the LP-WUS may only include the data.

In some embodiments, a duration of the LP-WUS corresponding to OFDM-LR is D, that is, the LP-WUR of the terminal needs to receive the LP-WUS within the time period D. The value of D may be predefined by the protocol, semi-statically configured by a base station, or dynamically indicated by a base station. The duration of the preamble is d1, in which d1 may be predefined by the protocol, semi-statically configured by the base station, or dynamically indicated by the base station, and d1 is not greater than D. The duration of the data is d2, in which d2 may be predefined by the protocol, semi-statically configured by the base station, or dynamically indicated by the base station, and d2 is not greater than D. The duration of the CRC is d3, in which d3 may be predefined by the protocol, semi-statically configured by the base station, or dynamically indicated by the base station, and d3 is not greater than D.

In some embodiments, the manners for the LP-WUS to carry information include at least one of the following: the wake up signal is carried completely through OOK modulation; the wake up signal is carried completely through a time domain sequence/frequency domain sequence carried by an LP-WUS symbol; the LP-WUS information may include multiple pieces of subset information, part of which carries the wake up signal through the OOK modulation, and the other part carries the wake up signal through the time domain sequence/frequency domain sequence carried by the LP-WUS symbol. The information carried by the sequence and the information carried by the OOK modulation may be the same or different.

In step S5102, a state of an MR of the terminal is determined according to the wake up signal.

In some embodiments, the LP-WUS includes multiple pieces of information, a set of LP-WUS information is W, and the duration of the LP-WUS information is D. The schemes for mapping the LP-WUS information to the OOK symbol and/or the time domain sequence or the frequency domain sequence on the OOK symbol include at least one of the following.

FIG. 5b is a schematic diagram illustrating an LP-WUS information mapping relationship according to an embodiment of the present disclosure. As shown in FIG. 5b, information carried within a duration d1 of a preamble is W, that is, a time domain sequence or a frequency domain sequence of an OOK symbol within the duration d1 of the preamble carries the information W, and/or OOK modulation within the duration d1 of the preamble carries the information W. Information carried in a duration D-d1 is W, and the duration D-d1 may be a duration d2 of data, or a sum of the duration of the data and a duration of CRC, that is, D-d1=d2+d3.

FIG. 5c is a schematic diagram illustrating an LP-WUS information mapping relationship according to an embodiment of the present disclosure. As shown in FIG. 5c, information carried within a duration d1 of a preamble is A, that is, a time domain sequence or a frequency domain sequence of an OOK symbol within the duration d1 of the preamble carries the information A, or OOK modulation within the duration d1 of the preamble carries the information A, where A is a subset of W. Information carried in a duration D-d1 is W-A, and the duration D-d1 may be a duration d2 of data, or a sum of the duration of the data and a duration of CRC, that is, D-d1=d2+d3.

FIG. 5d is a schematic diagram illustrating an LP-WUS information mapping relationship according to an embodiment of the present disclosure. As shown in FIG. 5d, information carried within a duration d1 of a preamble is A, that is, a time domain sequence or a frequency domain sequence of an OOK symbol within the duration d1 of the preamble carries the information A, where A is a subset of W. Information carried by OOK modulation within a duration D-d1 is W, information carried by the time domain sequence or the frequency domain sequence of the OOK symbol within the duration D-d1 is W-A, and the duration D-d1 may be a duration d2 of data, or a sum of the duration of the data and a duration of CRC, that is, D-d1=d2+d3.

FIG. 5e is a schematic diagram illustrating an LP-WUS information mapping relationship according to an embodiment of the present disclosure. As shown in FIG. 5e, information carried within a duration d1 of a preamble is A, that is, a time domain sequence or a frequency domain sequence of an OOK symbol within the duration d1 of the preamble carries the information A, where A is a subset of W. Information carried by OOK modulation within a duration D-d1 is W-A, information carried by the time domain sequence or the frequency domain sequence of the OOK symbol within the duration D-d1 is W-A, and the duration D-d1 may be a duration d2 of data, or a sum of the duration of the data and a duration of CRC, that is, D-d1=d2+d3.

FIG. 5f is a schematic diagram illustrating an LP-WUS information mapping relationship according to an embodiment of the present disclosure. As shown in FIG. 5f, information carried within a duration d1 of a preamble is W, that is, a time domain sequence or a frequency domain sequence of an OOK symbol within the duration d1 of the preamble carries the information W. Information carried by OOK modulation within a duration D-d1 is W, information carried by the time domain sequence or the frequency domain sequence of the OOK symbol within the duration D-d1 is W, and the duration D-d1 may be a duration d2 of data, or a sum of the duration of the data and a duration of CRC, that is, D-d1=d2+d3.

FIG. 5g is a schematic diagram illustrating an LP-WUS information mapping relationship according to an embodiment of the present disclosure. As shown in FIG. 5g, information carried within a duration d1 of a preamble is A, that is, a time domain sequence or a frequency domain sequence of an OOK symbol within the duration d1 of the preamble carries the information A, where A is a subset of W. Information carried by OOK modulation within a duration D-d1 is W-A-B, information carried by the time domain sequence or the frequency domain sequence of the OOK symbol within the duration D-d1 is B, where B is a subset of W, and the duration D-d1 may be a duration d2 of data, or a sum of the duration of the data and a duration of CRC, that is, D-d1=d2+d3.

FIG. 5h is a schematic diagram illustrating an LP-WUS information mapping relationship according to an embodiment of the present disclosure. As shown in FIG. 5h, information carried within a duration d1 of a preamble is W-B, that is, a time domain sequence or a frequency domain sequence of an OOK symbol within the duration d1 of the preamble carries the information W-B. Information carried by OOK modulation within a duration D-d1 is W-B, information carried by the time domain sequence or the frequency domain sequence of the OOK symbol within the duration D-d1 is B, where B is a subset of W, and the duration D-d1 may be a duration d2 of data, or a sum of the duration of the data and a duration of CRC, that is, D-d1=d2+d3.

FIG. 5i is a schematic diagram illustrating an LP-WUS information mapping relationship according to an embodiment of the present disclosure. As shown in FIG. 5i, information carried within a duration d1 of a preamble is A, that is, a time domain sequence or a frequency domain sequence of an OOK symbol within the duration d1 of the preamble carries the information A, where A is a subset of W. Information carried by OOK modulation within a duration D-d1 is W, information carried by the time domain sequence or the frequency domain sequence of the OOK symbol within the duration D-d1 is A, and the duration D-d1 may be a duration d2 of data, or a sum of the duration of the data and a duration of CRC, that is, D-d1=d2+d3.

FIG. 5j is a schematic diagram illustrating an LP-WUS information mapping relationship according to an embodiment of the present disclosure. As shown in FIG. 5j, information carried within a duration d1 of a preamble is A, that is, a time domain sequence or a frequency domain sequence of an OOK symbol within the duration d1 of the preamble carries the information A, where A is a subset of W. Information carried by OOK modulation within a duration D-d1 is W-A, information carried by the time domain sequence or the frequency domain sequence of the OOK symbol within the duration D-d1 is A, and the duration D-d1 may be a duration d2 of data, or a sum of the duration of the data and a duration of CRC, that is, D-d1=d2+d3.

FIG. 5k is a schematic diagram illustrating an LP-WUS information mapping relationship according to an embodiment of the present disclosure. As shown in FIG. 5k, within a duration d1 of a preamble, the duration d1 may also be divided into two parts d1a and d1b. The time domain sequence or frequency domain sequence of an OOK symbol within the duration d1a includes a fixed sequence, and the time domain sequence or frequency domain sequence of the OOK symbol within the duration d1b carries the wake up signal W. For example, the time domain sequence or frequency domain sequence of the OOK symbol within the duration d1b may be used to carry first subset information A or second subset information W-B. In this way, the fixed sequence of the OOK symbol within the duration d1a may be used to enhance the synchronization performance of the wake up signal.

In the above-mentioned manner, all or part of the wake up signal of the LP-WUS is carried in the preamble of the LP-WUS information, and the data of the LP-WUS information is supplemented by the preamble, the detection performance of the OOK-LR and the OFDM-LR on the wake up signal in the terminal is improved, and the communication stability of an OOK-LR link and an OFDM-LR link is ensured.

Embodiments of the present disclosure further provide a device for implementing any of the above methods, for example, a device including units or modules for implementing the steps performed by the terminal in any of the above methods. For another example, another device is also provided, which includes units or modules for implementing the steps performed by the network device (such as an access network device, a core network function node, a core network device and the like) in any of the above methods.

It should be understood that the division of each unit or module in the above device is only a division of logical functions, which may be fully or partially integrated into a physical entity or physically separated in actual implementation. Moreover, the units or modules in the device may be implemented in a form of calling software by a processor: for example, the device includes a processor, which is connected with a memory, and instructions are stored in the memory, and the processor calls the instructions stored in the memory to implement any of the above methods or implement the functions of the units or modules of the device, in which the processor is a general-purpose processor, such as a central processing unit (CPU) or a microprocessor, and the memory is a memory in the device or a memory outside the device. Alternatively, the units or modules in the device may be implemented in a form of hardware circuits, and some or all of the functions of the units or modules may be implemented by designing the hardware circuits, which may be understood as one or more processors; for example, in an implementation, the above-mentioned hardware circuit is an application-specific integrated circuit (ASIC), and some or all of the functions of the above-mentioned units or modules are implemented by designing the logical relationship of elements in the circuit; for another example, in another implementation, the above hardware circuit may be implemented by a programmable logic device (PLD). Take a field programmable gate array (FPGA) as an example, it may include a large number of logic gates, and the connection relationship between the logic gates is configured by configuration files, implementing the functions of some or all of the above units or modules. All the units or modules of the above device may be implemented entirely in the form of calling software by the processor, or entirely in the form of hardware circuits, or partially in the form of calling software by a processor, and the rest is implemented in the form of hardware circuits.

In embodiments of the present disclosure, the processor is a circuit with signal processing capability. In an implementation, the processor may be a circuit with instruction reading and running capability, such as a central processing unit (CPU), a microprocessor, a graphics processing unit (GPU) (which may be understood as a microprocessor), or a digital signal processor (DSP). In another implementation, the processor may realize certain functions through the logical relationship of hardware circuits, which are fixed or reconfigurable. For example, the processor is a hardware circuit implemented by an application-specific integrated circuit (ASIC) or a programmable logic device (PLD), such as an FPGA. In the reconfigurable hardware circuit, the process that the processor loads the configuration document to implement the hardware circuit configuration may be understood as the process that the processor loads instructions to implement the functions of some or all of the above units or modules. Furthermore, it may also be a hardware circuit designed for artificial intelligence, which may be understood as the ASIC, such as neural network processing unit (NPU), tensor processing unit (TPU), deep learning processing unit (DPU) and so on.

FIG. 6 is a block diagram illustrating a terminal provided in an embodiment of the present disclosure. As shown in FIG. 6, the terminal 6100 may include: a transceiver module 6101 and a processing module 6102. In some embodiments, the transceiver module 6101 is configured to receive a wake up signal sent by a network device, in which the wake up signal is carried by a first resource. The processing module 6102 is configured to determine a first state of an MR of the terminal according to the wake up signal. Optionally, the transceiver module is configured to perform at least one of the communication steps such as sending and/or receiving performed by a terminal 101 in any of the foregoing methods, which is not repeated herein.

In some embodiments, the transceiver module 6101 may include a sending module and/or a receiving module. The sending module and the receiving module may be separate or integrated. Optionally, the transceiver module may be interchangeable with a transceiver.

In some embodiments, the processing module 6102 may be interchangeable with a performing module.

In some embodiments, the wake up signal includes at least one of a preamble, data or a check code.

In some embodiments, a duration of the wake up signal is a first duration, a duration of the preamble is a second duration, a duration of the data is a third duration, and a duration of the check code is a fourth duration; and the first duration, the second duration, the third duration and the fourth duration are determined by any one of:
first protocol information;
first information sent by the network device, in which the first information is semi-static configuration information; or
second information sent by the network device, in which the second information is dynamic configuration information.

In some embodiments, the first resource includes at least one of:
a first symbol, in which the first symbol is an OOK modulation symbol; or
a first sequence, in which the first sequence is a time domain sequence or a frequency domain sequence.

In some embodiments, the wake up signal includes the preamble, and the first symbol and/or the first sequence carry the wake up signal within the second duration of the preamble.

In some embodiments, a difference between the first duration and the second duration is a remaining duration, the wake up signal is carried within the remaining duration, and the remaining duration is the third duration, or the remaining duration is a sum of the third duration and the fourth duration.

In some embodiments, the wake up signal includes the preamble, the first symbol or the first sequence carries first subset information within the second duration of the preamble, and the first subset information is a subset of the wake up signal.

In some embodiments, the difference between the first duration and the second duration is the remaining duration, second subset information is carried within the remaining duration, the second subset information is a subset of the wake up signal, and a sum of the second subset information and the first subset information is the wake up signal; and the remaining duration is the third duration, or the remaining duration is the sum of the third duration and the fourth duration.

In some embodiments, the first sequence carries the first subset information within the second duration of the preamble; the difference between the first duration and the second duration is the remaining duration, within the remaining duration, the first symbol carries the wake up signal, and the first sequence carries the second subset information; the second subset information is the subset of the wake up signal, and the sum of the second subset information and the first subset information is the wake up signal; and the remaining duration is the third duration, or the remaining duration is the sum of the third duration and the fourth duration.

In some embodiments, the first sequence carries the first subset information within the second duration of the preamble; the difference between the first duration and the second duration is the remaining duration, within the remaining duration, the first symbol carries second subset information, and the first sequence carries the second subset information; the second subset information is the subset of the wake up signal, and the sum of the second subset information and the first subset information is the wake up signal; and the remaining duration is the third duration, or the remaining duration is the sum of the third duration and the fourth duration.

In some embodiments, the first sequence carries the wake up signal within the second duration of the preamble; the difference between the first duration and the second duration is the remaining duration, within the remaining duration, the first symbol carries the wake up signal, and the first sequence carries the wake up signal; and the remaining duration is the third duration, or the remaining duration is the sum of the third duration and the fourth duration.

In some embodiments, the first sequence carries the first subset information within the second duration of the preamble; the difference between the first duration and the second duration is the remaining duration, within the remaining duration, the first sequence carries the second subset information, and the first symbol carries third subset information; the second subset information and the third subset information are each the subset of the wake up signal, and the third subset information, the second subset information and the first subset information constitute the wake up signal; and the remaining duration is the third duration, or the remaining duration is the sum of the third duration and the fourth duration.

In some embodiments, the first sequence carries the first subset information within the second duration of the preamble; the difference between the first duration and the second duration is the remaining duration, within the remaining duration, the first symbol carries the first subset information, and the first sequence carries the second subset information; the first subset information and the second subset information are each the subset of the wake up signal, and the sum of the second subset information and the first subset information is the wake up signal; and the remaining duration is the third duration, or the remaining duration is the sum of the third duration and the fourth duration.

In some embodiments, the first sequence carries the first subset information within the second duration of the preamble; the difference between the first duration and the second duration is the remaining duration, within the remaining duration, the first symbol carries the wake up signal, and the first sequence carries the first subset information; and the remaining duration is the third duration, or the remaining duration is the sum of the third duration and the fourth duration.

In some embodiments, the first sequence carries the first subset information within the second duration of the preamble; the difference between the first duration and the second duration is the remaining duration, within the remaining duration, the first symbol carries the second subset information, and the first sequence carries the first subset information; the second subset information is the subset of the wake up signal; and the remaining duration is the third duration, or the remaining duration is the sum of the third duration and the fourth duration.

In some embodiments, the second duration includes a first sub-duration and a second sub-duration, the first sequence includes a target sequence within the first sub-duration, and the first sequence carries the wake up signal within the second sub-duration.

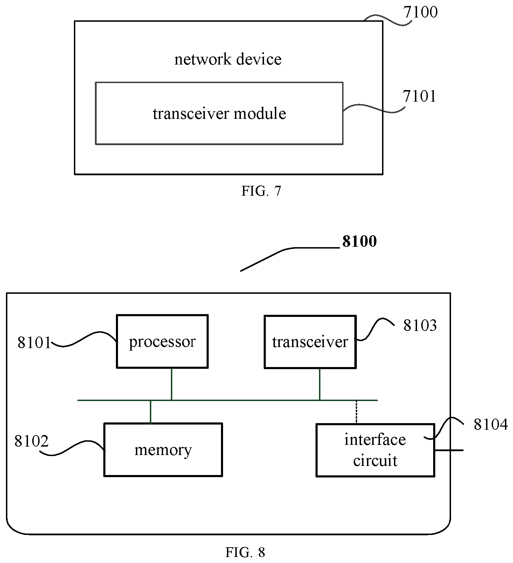

FIG. 7 is a block diagram illustrating a network device provided in an embodiment of the present disclosure. As shown in FIG. 7, the network device 7100 may include: a transceiver module 7101. In some embodiments, the transceiver module 7101 is configured to send a wake up signal to a terminal, in which the wake up signal includes a first resource, the first resource carries the wake up signal, and the wake up signal is used to instruct the terminal to determine a first state of an MR of the terminal according to the wake up signal. Optionally, the transceiver module 7101 is configured to perform at least one of the communication steps such as sending and/or receiving performed by a network device 102 in any of the foregoing methods, which is not repeated herein.

In some embodiments, the transceiver module may include a sending module and/or a receiving module. The sending module and the receiving module may be separate or integrated. Optionally, the transceiver module may be interchangeable with a transceiver.

In some embodiments, the wake up signal includes at least one of a preamble, data or a check code.

In some embodiments, a duration of the wake up signal is a first duration, a duration of the preamble is a second duration, a duration of the data is a third duration, and a duration of the check code is a fourth duration; and the first duration, the second duration, the third duration and the fourth duration are determined by any one of:
first protocol information;
first information sent by the network device, in which the first information is semi-static configuration information; or
second information sent by the network device, in which the second information is dynamic configuration information.

In some embodiments, the first resource includes at least one of:
a first symbol, in which the first symbol is an OOK modulation symbol; or
a first sequence, in which the first sequence is a time domain sequence or a frequency domain sequence.

In some embodiments, the wake up signal includes the preamble, and the first symbol and/or the first sequence carry the wake up signal within the second duration of the preamble.

In some embodiments, a difference between the first duration and the second duration is a remaining duration, the wake up signal is carried within the remaining duration, and the remaining duration is the third duration, or the remaining duration is a sum of the third duration and the fourth duration.

In some embodiments, the wake up signal includes the preamble, the first symbol or the first sequence carries first subset information within the second duration of the preamble, and the first subset information is a subset of the wake up signal.

In some embodiments, the difference between the first duration and the second duration is the remaining duration, second subset information is carried within the remaining duration, the second subset information is a subset of the wake up signal, and a sum of the second subset information and the first subset information is the wake up signal; and the remaining duration is the third duration, or the remaining duration is the sum of the third duration and the fourth duration.

In some embodiments, the first sequence carries the first subset information within the second duration of the preamble; the difference between the first duration and the second duration is the remaining duration, within the remaining duration, the first symbol carries the wake up signal, and the first sequence carries the second subset information; the second subset information is the subset of the wake up signal, and the sum of the second subset information and the first subset information is the wake up signal; and the remaining duration is the third duration, or the remaining duration is the sum of the third duration and the fourth duration.

In some embodiments, the first sequence carries the first subset information within the second duration of the preamble; the difference between the first duration and the second duration is the remaining duration, within the remaining duration, the first symbol carries second subset information, and the first sequence carries the second subset information; the second subset information is the subset of the wake up signal, and the sum of the second subset information and the first subset information is the wake up signal; and the remaining duration is the third duration, or the remaining duration is the sum of the third duration and the fourth duration.

In some embodiments, the first sequence carries the wake up signal within the second duration of the preamble; the difference between the first duration and the second duration is the remaining duration, within the remaining duration, the first symbol carries the wake up signal, and the first sequence carries the wake up signal; and the remaining duration is the third duration, or the remaining duration is the sum of the third duration and the fourth duration.

In some embodiments, the first sequence carries the first subset information within the second duration of the preamble; the difference between the first duration and the second duration is the remaining duration, within the remaining duration, the first sequence carries the second subset information, and the first symbol carries third subset information; the second subset information and the third subset information are each the subset of the wake up signal, and the third subset information, the second subset information and the first subset information constitute the wake up signal; and the remaining duration is the third duration, or the remaining duration is the sum of the third duration and the fourth duration.

In some embodiments, the first sequence carries the first subset information within the second duration of the preamble; the difference between the first duration and the second duration is the remaining duration, within the remaining duration, the first symbol carries the first subset information, and the first sequence carries the second subset information; the first subset information and the second subset information are each the subset of the wake up signal, and the sum of the second subset information and the first subset information is the wake up signal; and the remaining duration is the third duration, or the remaining duration is the sum of the third duration and the fourth duration.

In some embodiments, the first sequence carries the first subset information within the second duration of the preamble; the difference between the first duration and the second duration is the remaining duration, within the remaining duration, the first symbol carries the wake up signal, and the first sequence carries the first subset information; and the remaining duration is the third duration, or the remaining duration is the sum of the third duration and the fourth duration.

In some embodiments, the first sequence carries the first subset information within the second duration of the preamble; the difference between the first duration and the second duration is the remaining duration, within the remaining duration, the first symbol carries the second subset information, and the first sequence carries the first subset information; the second subset information is the subset of the wake up signal; and the remaining duration is the third duration, or the remaining duration is the sum of the third duration and the fourth duration.

In some embodiments, the second duration includes a first sub-duration and a second sub-duration, the first sequence includes a target sequence within the first sub-duration, and the first sequence carries the wake up signal within the second sub-duration.

FIG. 8 is a block diagram illustrating a network device 8100 provided in an embodiment of the present disclosure The network device 8100 may be a communication device (e.g., an access network device, a core network device, etc.), may also be a terminal (e.g., user equipment, etc.), may further be a chip, a chip system, a processor or the like that supports the network device to implement any of the foregoing methods, or may be a chip, a chip system, a processor or the like that supports the terminal to implement any of the above methods. The network device 8100 may be used to implement the methods described in the above method embodiments, and for details, reference may be made to the descriptions in the above method embodiments.

As shown in FIG. 8, the network device 8100 includes one or more processors 8101. The processor 8101 may be a general-purpose processor or a special-purpose processor, for example, a baseband processor or a central processing unit. The baseband processor may be used to process communication protocols and communication data, and the central processor may be used to control communication devices (such as a base station, a baseband chip, a terminal, a terminal chips, a DU or a CU, etc.), execute programs, and process program data. Optionally, the network device 8100 is configured to perform any one of the above methods. Optionally, one or more processors 8101 are configured to invoke instructions to cause the network device 8100 to perform any of the above methods.

In some embodiments, the network device 8100 further includes one or more transceivers 8102. In a case where the network device 8100 includes one or more transceivers 8102, communication steps such as sending and receiving in the above methods are performed by the transceiver 8102, and other steps are performed by the processor 8101. In an optional embodiment, the transceiver may include a receiver and/or a transmitter, which may be separate or integrated. Optionally, terms such as transceiver, transceiver unit, transceiving machine, transceiver circuit and the like may be replaced with each other, terms such as transmitter, transmitting unit, transmitting machine, transmitting circuit and the like may be replaced with each other, and terms such as receiver, receiving unit, receiving machine, receiving circuit and the like may be replaced with each other.

In some embodiments, the network device 8100 further includes one or more memories 8103 for storing instructions. Optionally, all or part of the memories 8103 may also be located outside the network device 8100. In an optional embodiment, the network device 8100 further includes one or more interface circuits 8104. Optionally, the interface circuit 8104 is connected to the memory 8102. The interface circuit 8104 may be used to receive signals from the memory 8102 or other devices, and may be used to send signals to the memory 8102 or other devices. For example, the interface circuit 8104 may read data stored in the memory 8102 and send the data to the processor 8101.

The network device 8100 described in the above embodiments may be a network device or a terminal, but the scope of the network device 8100 described in the present disclosure is not limited to this. The structure of the network device 8100 may not be limited by FIG. 8A. The communication device may be a stand-alone device or may be part of a larger device. For example, the communication device may be: 1) a stand-alone integrated circuit (IC), or a chip, or a chip system or subsystem; 2) a set of one or more ICs, in which optionally, the set of ICs may also include a storage component for storing data and programs; 3) an ASIC, such as a modem; 4) a module that may be embedded in other devices; (5) a receiver, a terminal device, an intelligent terminal device, a cellular phone, a wireless device, a handheld device, a mobile unit, an in-vehicle device, a network device, a cloud device, an artificial intelligence device, etc.; (6) others.

The present disclosure further provides a storage medium storing instructions which, when executed on the network device 8100, cause the network device 8100 to perform any of the above methods. Optionally, the storage medium is an electronic storage medium. Optionally, the storage medium is a computer-readable storage medium, but it is not limited to this, and it may also be a storage medium readable by other devices. Optionally, the storage medium may be a non-transitory storage medium, but it is not limited to this, and it may also be a temporary storage medium.

The present disclosure further provides a program product which, when executed by the network device 8100, causes the network device 8100 to perform any of the above methods. Optionally, the program product is a computer program product.

The present disclosure further provides a computer program that, when run on a computer, causes the computer to perform any of the above methods.

## Claims

1. A communication method, performed by a terminal, comprising:
receiving a wake up signal sent by a network device, wherein the wake up signal comprises a first resource, and the first resource carries the wake up signal; and
determining a first state of a main radio (MR) of the terminal according to the wake up signal.

2. The method according to claim 1, wherein the wake up signal comprises at least one of a preamble, data or a check code.

3. The method according to claim 2, wherein a duration of the wake up signal is a first duration, a duration of the preamble is a second duration, a duration of the data is a third duration, and a duration of the check code is a fourth duration; and the first duration, the second duration, the third duration and the fourth duration are determined by any one of:
first protocol information;
first information sent by the network device, wherein the first information is semi-static configuration information; or
second information sent by the network device, wherein the second information is dynamic configuration information.

4. The method according to any one of claims 1 to 3, wherein the first resource comprises at least one of:
a first symbol, wherein the first symbol is an on-off keying (OOK) modulation symbol; or
a first sequence, wherein the first sequence is a time domain sequence or a frequency domain sequence.

5. The method according to claim 4, wherein the wake up signal comprises the preamble, and the first symbol and/or the first sequence carry the wake up signal within the second duration of the preamble.

6. The method according to claim 5, wherein a difference between the first duration and the second duration is a remaining duration, the wake up signal is carried within the remaining duration, and the remaining duration is the third duration, or the remaining duration is a sum of the third duration and the fourth duration.

7. The method according to claim 4, wherein the wake up signal comprises the preamble, the first symbol or the first sequence carries first subset information within the second duration of the preamble, and the first subset information is a subset of the wake up signal.

8. The method according to claim 7, wherein a difference between the first duration and the second duration is a remaining duration, second subset information is carried within the remaining duration, the second subset information is a subset of the wake up signal, and a sum of the second subset information and the first subset information is the wake up signal; and the remaining duration is the third duration, or the remaining duration is a sum of the third duration and the fourth duration.

9. The method according to claim 7, wherein the first sequence carries the first subset information within the second duration of the preamble; a difference between the first duration and the second duration is a remaining duration, within the remaining duration, the first symbol carries the wake up signal, and the first sequence carries second subset information; the second subset information is a subset of the wake up signal, and a sum of the second subset information and the first subset information is the wake up signal; and the remaining duration is the third duration, or the remaining duration is a sum of the third duration and the fourth duration.

10. The method according to claim 7, wherein the first sequence carries the first subset information within the second duration of the preamble; a difference between the first duration and the second duration is a remaining duration, within the remaining duration, the first symbol carries second subset information, and the first sequence carries the second subset information; the second subset information is a subset of the wake up signal, and a sum of the second subset information and the first subset information is the wake up signal; and the remaining duration is the third duration, or the remaining duration is a sum of the third duration and the fourth duration.

11. The method according to claim 5, wherein the first sequence carries the wake up signal within the second duration of the preamble; a difference between the first duration and the second duration is a remaining duration, within the remaining duration, the first symbol carries the wake up signal, and the first sequence carries the wake up signal; and the remaining duration is the third duration, or the remaining duration is a sum of the third duration and the fourth duration.

12. The method according to claim 7, wherein the first sequence carries the first subset information within the second duration of the preamble; a difference between the first duration and the second duration is a remaining duration, within the remaining duration, the first sequence carries second subset information, and the first symbol carries third subset information; the second subset information and the third subset information are each a subset of the wake up signal, and the third subset information, the second subset information and the first subset information constitute the wake up signal; and the remaining duration is the third duration, or the remaining duration is a sum of the third duration and the fourth duration.

13. The method according to claim 7, wherein the first sequence carries the first subset information within the second duration of the preamble; a difference between the first duration and the second duration is a remaining duration, within the remaining duration, the first symbol carries the first subset information, and the first sequence carries second subset information; the first subset information and the second subset information are each a subset of the wake up signal, and a sum of the second subset information and the first subset information is the wake up signal; and the remaining duration is the third duration, or the remaining duration is a sum of the third duration and the fourth duration.

14. The method according to claim 7, wherein the first sequence carries the first subset information within the second duration of the preamble; a difference between the first duration and the second duration is a remaining duration, within the remaining duration, the first symbol carries the wake up signal, and the first sequence carries the first subset information; and the remaining duration is the third duration, or the remaining duration is a sum of the third duration and the fourth duration.

15. The method according to claim 7, wherein the first sequence carries the first subset information within the second duration of the preamble; a difference between the first duration and the second duration is a remaining duration, within the remaining duration, the first symbol carries second subset information, and the first sequence carries the first subset information; the second subset information is a subset of the wake up signal; and the remaining duration is the third duration, or the remaining duration is a sum of the third duration and the fourth duration.

16. The method according to any one of claims 5 to 15, wherein the second duration comprises a first sub-duration and a second sub-duration, the first sequence comprises a target sequence within the first sub-duration, and the first sequence carries the wake up signal within the second sub-duration.

17. A communication method, performed by a network device, comprising:
sending a wake up signal to a terminal, wherein the wake up signal comprises a first resource, the first resource carries the wake up signal, and the wake up signal is used to instruct the terminal to determine a first state of a main radio (MR) of the terminal according to the wake up signal.

18. The method according to claim 17, wherein the wake up signal comprises at least one of a preamble, data or a check code.

19. The method according to claim 18, wherein a duration of the wake up signal is a first duration, a duration of the preamble is a second duration, a duration of the data is a third duration, and a duration of the check code is a fourth duration; and the first duration, the second duration, the third duration and the fourth duration are determined by any one of:
first protocol information;
first information sent by the network device, wherein the first information is semi-static configuration information; or
second information sent by the network device, wherein the second information is dynamic configuration information.

20. The method according to any one of claims 17 to 19, wherein the first resource comprises at least one of:
a first symbol, wherein the first symbol is an on-off keying (OOK) modulation symbol; or
a first sequence, wherein the first sequence is a time domain sequence or a frequency domain sequence.

21. The method according to claim 24, wherein the wake up signal comprises the preamble, and the first symbol and/or the first sequence carry the wake up signal within the second duration of the preamble.

22. The method according to claim 21, wherein the wake up signal comprises the preamble, and the first symbol and/or the first sequence carry the wake up signal within the second duration of the preamble.

23. The method according to claim 22, wherein a difference between the first duration and the second duration is a remaining duration, the wake up signal is carried within the remaining duration, and the remaining duration is the third duration, or the remaining duration is a sum of the third duration and the fourth duration.

24. The method according to claim 21, wherein the wake up signal comprises the preamble, the first symbol or the first sequence carries first subset information within the second duration of the preamble, and the first subset information is a subset of the wake up signal.

25. The method according to claim 24, wherein a difference between the first duration and the second duration is a remaining duration, second subset information is carried within the remaining duration, the second subset information is a subset of the wake up signal, and a sum of the second subset information and the first subset information is the wake up signal; and the remaining duration is the third duration, or the remaining duration is a sum of the third duration and the fourth duration.

26. The method according to claim 24, wherein the first sequence carries the first subset information within the second duration of the preamble; a difference between the first duration and the second duration is a remaining duration, within the remaining duration, the first symbol carries the wake up signal, and the first sequence carries second subset information; the second subset information is a subset of the wake up signal, and a sum of the second subset information and the first subset information is the wake up signal; and the remaining duration is the third duration, or the remaining duration is a sum of the third duration and the fourth duration.

27. The method according to claim 24, wherein the first sequence carries the first subset information within the second duration of the preamble; a difference between the first duration and the second duration is a remaining duration, within the remaining duration, the first symbol carries second subset information, and the first sequence carries the second subset information; the second subset information is a subset of the wake up signal, and a sum of the second subset information and the first subset information is the wake up signal; and the remaining duration is the third duration, or the remaining duration is a sum of the third duration and the fourth duration.

28. The method according to claim 22, wherein the first sequence carries the wake up signal within the second duration of the preamble; a difference between the first duration and the second duration is a remaining duration, within the remaining duration, the first symbol carries the wake up signal, and the first sequence carries the wake up signal; and the remaining duration is the third duration, or the remaining duration is a sum of the third duration and the fourth duration.

29. The method according to claim 24, wherein the first sequence carries the first subset information within the second duration of the preamble; a difference between the first duration and the second duration is a remaining duration, within the remaining duration, the first sequence carries second subset information, and the first symbol carries third subset information; the second subset information and the third subset information are each a subset of the wake up signal, and the third subset information, the second subset information and the first subset information constitute the wake up signal; and the remaining duration is the third duration, or the remaining duration is a sum of the third duration and the fourth duration.

30. The method according to claim 24, wherein the first sequence carries the first subset information within the second duration of the preamble; a difference between the first duration and the second duration is a remaining duration, within the remaining duration, the first symbol carries the first subset information, and the first sequence carries second subset information; the first subset information and the second subset information are each a subset of the wake up signal, and a sum of the second subset information and the first subset information is the wake up signal; and the remaining duration is the third duration, or the remaining duration is a sum of the third duration and the fourth duration.

31. The method according to claim 24, wherein the first sequence carries the first subset information within the second duration of the preamble; a difference between the first duration and the second duration is a remaining duration, within the remaining duration, the first symbol carries the wake up signal, and the first sequence carries the first subset information; and the remaining duration is the third duration, or the remaining duration is a sum of the third duration and the fourth duration.

32. The method according to claim 24, wherein the first sequence carries the first subset information within the second duration of the preamble; a difference between the first duration and the second duration is a remaining duration, within the remaining duration, the first symbol carries second subset information, and the first sequence carries the first subset information; the second subset information is a subset of the wake up signal; and the remaining duration is the third duration, or the remaining duration is a sum of the third duration and the fourth duration.

33. The method according to any one of claims 22 to 32, wherein the second duration comprises a first sub-duration and a second sub-duration, the first sequence comprises a target sequence within the first sub-duration, and the first sequence carries the wake up signal within the second sub-duration.

34. A communication method, comprising:
sending, by a network device, a wake up signal to a terminal, wherein the wake up signal is carried by a first resource; and
determining, by the terminal, a first state of a main radio (MR) of the terminal according to the wake up signal.

35. A terminal, comprising:
a transceiver module configured to receive a wake up signal sent by a network device, wherein the wake up signal is carried by a first resource; and
a processing module configured to determine a first state of a main radio (MR) of the terminal according to the wake up signal.

36. A network device, comprising:
a transceiver module configured to send a wake up signal to a terminal, wherein the wake up signal is carried by a first resource, and the wake up signal is used to instruct the terminal to determine a first state of a main radio (MR) of the terminal according to the wake up signal.

37. A terminal, comprising:
one or more processors,
wherein the terminal is configured to perform the communication method according to any one of claims 1 to 16.

38. A network device, comprising:
one or more processors,
wherein the network device is configured to perform the communication method according to any one of claims 17 to 33.

39. A communication system, comprising:
a terminal configured to implement the communication method according to any one of claims 1 to 16; and
a network device configured to implement the communication method according to any one of claims 17 to 33.

40. A storage medium storing instructions that, when executed on a communication device, cause the communication device to perform the communication method according to any one of claims 1 to 16 and 17 to 33.
